# EUROPEAN PATENT APPLICATION

(11) **EP 4 789 941 A1**
(43) Date of publication of application: **12.08.2026**
(21) Application number: 24874395.7
(22) Date of filing: 28.08.2024
(51) Int. Cl.: B60W 50/14, B60K 35/28, B60W 30/165, B60W 30/182, B60W 60/00

(54) **DISPLAY CONTROL DEVICE, VEHICLE PROVIDED WITH DISPLAY CONTROL DEVICE, DISPLAY CONTROL METHOD, AND DISPLAY CONTROL PROGRAM**

(30) Priority: 05.10.2023 JP 2023173695
(71) Applicant: TOYOTA JIDOSHA KABUSHIKI KAISHA, Toyota-shi, Aichi-ken 471 8571 (JP)
(72) Inventor: KURIHASHI, Sui, Toyota-shi, Aichi-ken 471 8571 (JP); KAMATANI, Hideki, Toyota-shi, Aichi-ken 471 8571 (JP)
(74) Representative: Cabinet Beau de Loménie
(86) International application number: PCT/JP2024/030634
(87) International publication number: WO 2025/074781

(57) **Abstract**

[TECHNICAL PROBLEM] To provide a display control apparatus which makes it easy for a user of an assistance system to grasp a utilization status of the assistance system.

[SOLUTION TO PROBLEM] A display control apparatus 10 controls operation of a display device 40 which displays information on an assistance system used for utilization of a host vehicle 100. The assistance system has a plurality of different assistance functions. The display control apparatus displays, by the display device, a result of an evaluation comprehensively evaluated with respect to a utilization status of the assistance system based on operation states of the respective assistance functions.

## Description

### TECHNICAL FIELD

The present invention relates to a display control apparatus, a vehicle comprising the display control apparatus, a display control method, and a display control program.

### BACKGROUND ART

There is known a vehicle driving assistance apparatus which controls operation of an assistance system including a plurality of assistance functions which assist driving of a host vehicle by an operator. As such a vehicle driving assistance apparatus, there is also known a vehicle driving assistance apparatus including a display control apparatus configured to display, on a display device, which assistance function among the assistance functions is operating and which assistance function is in an operable state (for example, see Patent Document 1).

### CITATION LIST

### PATENT LITERATURE

Patent LITERATURE 1 : Japanese Patent No. 6,460,019

### SUMMARY OF INVENTION

As described above, a conventional display control apparatus is configured to display, on a display device, which assistance function is operating and which assistance function is in an operable state. However, when the number of assistance functions displayed on the display device becomes too large, there is a possibility that a problem arises in that an operator of the host vehicle has difficulty grasping a utilization status of the assistance system.

An object of the present invention is to provide a display control apparatus, a vehicle comprising the display control apparatus, a display control method, and a display control program which make it easy for a user of an assistance system to grasp a utilization status of the assistance system.

A display control apparatus according to the present invention comprises a control device which controls operation of a display device which displays information on an assistance system used for utilization of a host vehicle. The assistance system has a plurality of different assistance functions. The control device is configured to display, by the display device, a result of an evaluation comprehensively evaluated with respect to a utilization status of the assistance system based on operation states of the respective assistance functions.

According to the display control apparatus according to the present invention, when the assistance system includes a plurality of assistance functions, a utilization status for each assistance function is not displayed by the display device. Instead, utilization statuses of the plurality of assistance functions (that is, a utilization status of the assistance system) are combined into one and displayed by the display device as a comprehensive evaluation. Therefore, it is possible to make it easy for a user of the assistance system to grasp the utilization status of the assistance system.

It should be noted that, in the display control apparatus according to the present invention, the control apparatus may be configured to display the result of the evaluation by the display device when the assistance system is operating, and to stop displaying the result of the evaluation by the display device when operation of the assistance system is stopped.

According to the display control apparatus according to the present invention, the result of the comprehensive evaluation is displayed only when there is a benefit in displaying the result of the comprehensive evaluation. Therefore, it is possible to suppress causing a user of the assistance system to feel annoyance due to unnecessary display of the result of the comprehensive evaluation.

Further, in the display control apparatus according to the present invention, for example, when the assistance system has two assistance functions, an evaluation value is set for each operation state of each of the assistance functions. When a sum of the evaluation values set for current operation states of the respective assistance functions is equal to or greater than a predetermined value, the evaluation becomes a highest evaluation. The evaluation values are set for the respective operation states of the respective assistance functions such that the sum of the evaluation values set for the current operation states of the respective assistance functions does not become equal to or greater than the predetermined value when the evaluation value set for a current operation state of one of the assistance functions is a value equal to or greater than a first evaluation value, and the evaluation value set for a current operation state of the other assistance function is smaller than a second evaluation value which is smaller than the first evaluation value.

According to the display control apparatus according to the present invention, when one of the assistance functions is in an operation state having a high evaluation value, and the other assistance function is in an operation state having a low evaluation value, the sum of the evaluation values is not equal to or greater than the predetermined value, and the comprehensive evaluation is not a high evaluation. Accordingly, it is possible to encourage a user of the assistance system to use more assistance functions in operation states having relatively high evaluation values.

Further, in the display control apparatus according to the present invention, for example, the evaluation values are set for the respective operation states of the respective assistance functions such that the sum of the evaluation values set for the current operation states of the respective assistance functions becomes equal to or greater than the predetermined value when the evaluation value set for the current operation state of the one assistance function is a value equal to or greater than the first evaluation value, and the evaluation value set for the current operation state of the other assistance function is a value smaller than the first evaluation value but equal to or greater than the second evaluation value.

According to the display control apparatus according to the present invention, when both assistance functions are in operation states having medium evaluation values, the sum of the evaluation values becomes equal to or greater than the predetermined value, and the comprehensive evaluation becomes a high evaluation. Therefore, it is possible to give a user of the assistance system a sense of satisfaction with using the assistance functions. Accordingly, it is possible to encourage the user of the assistance system to use more assistance functions in operation states having relatively high evaluation values.

Further, in the display control apparatus according to the present invention, the evaluation value is set, for example, to become higher as a degree of contribution to reducing an amount of energy consumption of the host vehicle becomes greater.

According to the display control apparatus according to the present invention, it is possible to more accurately reflect a benefit of using more assistance functions in the comprehensive evaluation.

In the display control apparatus according to the present invention, the operation state of the assistance function is, for example, a control mode being executed by the assistance function.

According to the display control apparatus according to the present invention, evaluation values can be set for each control mode, and a comprehensive evaluation can be performed based on a sum of the evaluation values.

In the display control apparatus according to the present invention, the assistance function is, for example, a function which autonomously accelerates and decelerates the host vehicle, and has a coasting acceleration/deceleration mode and a normal acceleration/deceleration mode as the control modes. In this case, the coasting acceleration/deceleration mode is, for example, a control mode in which the host vehicle is autonomously accelerated and decelerated such that an inter-vehicle distance fluctuates between an upper limit value and a lower limit value of a set inter-vehicle distance range, and in which the host vehicle is decelerated by causing the host vehicle to coast when a preceding vehicle exists in front of the host vehicle. The inter-vehicle distance is a distance between the preceding vehicle and the host vehicle. Further, the normal acceleration/deceleration mode is, for example, a control mode in which the host vehicle is autonomously accelerated and decelerated such that the inter-vehicle distance is maintained at a target inter-vehicle distance when the preceding vehicle exists. The evaluation value set for the normal acceleration/deceleration mode is, for example, lower than the evaluation value set for the coasting acceleration/deceleration mode.

According to the display control apparatus according to the present invention, a comprehensive evaluation when the assistance function is operating in the normal acceleration/deceleration mode becomes lower than a comprehensive evaluation when the assistance function is operating in the coasting acceleration/deceleration mode. Accordingly, it is possible to make a user of the assistance system grasp whether the assistance function is in an operation state having a large benefit or in an operation state having a small benefit.

Further, in the display control apparatus according to the present invention, the evaluation value set for the normal acceleration/deceleration mode is, for example, zero.

According to the display control apparatus according to the present invention, the comprehensive evaluation when the assistance function is operating in the normal acceleration/deceleration mode becomes low. Accordingly, it is possible to make a user of the assistance system grasp that the assistance function is in an operation state having a small benefit.

Further, in the display control apparatus according to the present invention, the coasting acceleration/deceleration mode includes, for example, an acceleration mode and a coasting deceleration mode. The acceleration mode is a mode in which the host vehicle is accelerated, and the coasting deceleration mode is a mode in which the host vehicle is decelerated by causing the host vehicle to coast. In this case, the evaluation value set for the acceleration mode is, for example, higher than the evaluation value set for the normal acceleration/deceleration mode, and the evaluation value set for the coasting deceleration mode is, for example, higher than the evaluation value set for the acceleration mode.

Although an amount of energy itself consumed for traveling of the host vehicle when the assistance function is operating in the acceleration mode is relatively large, operation of the assistance function in the acceleration mode is essential in order to subsequently operate the assistance function in the coasting deceleration mode. According to the display control apparatus according to the present invention, when the assistance function is operating in the acceleration mode, the comprehensive evaluation becomes higher than when the assistance function is operating in the normal acceleration/deceleration mode. Accordingly, when the assistance function is operating in an operation state that can reduce, in total, an amount of energy consumed for traveling of the host vehicle, the comprehensive evaluation can be set to a high evaluation.

In the display control apparatus according to the present invention, the evaluation becomes the highest evaluation, for example, when a sum of the evaluation values is equal to or greater than a predetermined value, and the evaluation value set for the coasting deceleration mode is, for example, the largest value within a range smaller than the predetermined value.

According to the display control apparatus according to the present invention, the evaluation value set for the coasting deceleration mode is set to the largest value within a range smaller than the predetermined value (a value of a sum of evaluation values at which the comprehensive evaluation becomes the highest evaluation). Therefore, it is possible to increase a possibility that the comprehensive evaluation becomes the highest evaluation, and as a result, it is possible to increase a possibility of giving a user of the assistance system a sense of satisfaction with using the assistance function.

Further, in the display control apparatus according to the present invention, the operation state is, for example, a traveling environment of the host vehicle realized by the assistance function.

A magnitude of a benefit obtained by operating the assistance function varies depending on a traveling environment of the host vehicle. According to the display control apparatus according to the present invention, the operation state is a traveling environment of the host vehicle realized by the assistance function. Therefore, evaluation values according to the traveling environment of the host vehicle are set, and a comprehensive evaluation is performed based on a sum of the evaluation values. Therefore, it is possible to perform a comprehensive evaluation which more accurately reflects a magnitude of a benefit obtained by operating the assistance function.

Further, in the display control apparatus according to the present invention, the assistance system includes, for example, as the assistance functions, a following travel function having a following travel mode in which the host vehicle is autonomously accelerated and decelerated such that the host vehicle travels following a preceding vehicle, and an air resistance reduction travel function having an air resistance reduction travel mode in which a target inter-vehicle distance is set such that an air resistance reduction effect of the host vehicle due to the preceding vehicle increases when the following travel function is in an operating state in the following travel mode. In this case, the traveling environment of the host vehicle is, for example, a vertical projected area of the preceding vehicle and an inter-vehicle distance when the air resistance reduction travel function is operating in the air resistance reduction travel mode.

The vertical projected area of the preceding vehicle and the inter-vehicle distance when the air resistance reduction travel function is operating in the air resistance reduction travel mode affect a magnitude of a benefit obtained by operating the assistance function. According to the display control apparatus according to the present invention, evaluation values according to the vertical projected area of the preceding vehicle and the inter-vehicle distance are set, and a comprehensive evaluation is performed based on a sum of the evaluation values. Therefore, it is possible to perform a comprehensive evaluation which more accurately reflects a magnitude of a benefit obtained by operating the assistance function.

Further, in the display control apparatus according to the present invention, the evaluation value set for the air resistance reduction travel mode is, for example, higher when a predetermined traveling environment condition that the vertical projected area is equal to or greater than a predetermined area and the inter-vehicle distance is less than a predetermined distance is satisfied than when the predetermined traveling environment condition is not satisfied.

As the vertical projected area is larger, an air resistance reduction effect on the host vehicle obtained by causing the host vehicle to travel following the preceding vehicle is larger. Further, as the inter-vehicle distance becomes shorter, an air resistance reduction effect on the host vehicle obtained by causing the host vehicle to travel following the preceding vehicle becomes larger. According to the display control apparatus according to the present invention, a higher evaluation value is set when the predetermined traveling environment condition that the vertical projected area is equal to or greater than the predetermined area and the inter-vehicle distance is less than the predetermined distance is satisfied, than when the predetermined traveling environment condition is not satisfied. Therefore, it is possible to perform a comprehensive evaluation which more accurately reflects a magnitude of a benefit obtained by operating the assistance function.

Further, in the display control apparatus according to the present invention, the evaluation value set for the air resistance reduction travel mode is obtained, for example, from a lookup table using the vertical projected area and the inter-vehicle distance as arguments.

According to the display control apparatus according to the present invention, the evaluation value is obtained from the lookup table. Therefore, it is possible to reduce a load on the control apparatus for obtaining the evaluation value.

Further, in the display control apparatus according to the present invention, the evaluation value set for the air resistance reduction travel mode is, for example, three or more kinds of values corresponding to a combination of the vertical projected area and the inter-vehicle distance.

When three or more kinds of evaluation values are set, not only a maximum evaluation value and a minimum evaluation value but also a medium evaluation value between the maximum evaluation value and the minimum evaluation value are set. According to the display control apparatus according to the present invention, three or more kinds of evaluation values are set. Therefore, even if operation states of many assistance functions are not operation states to which the maximum evaluation value is set, a relatively high comprehensive evaluation can be obtained as long as the operation states are operation states to which medium evaluation values are set. It is possible to encourage a user of the assistance system to use more assistance functions.

Further, a vehicle according to the present invention comprises the above-described display control apparatus.

According to the vehicle according to the present invention, for the same reasons as described above, it is possible to make it easy for a user of the assistance system to grasp a utilization status of the assistance system.

A display control method according to the present invention is a method for controlling operation of a display device which displays information on an assistance system used for utilization of a host vehicle, the assistance system including a plurality of different assistance functions. The display control method according to the present invention comprises a step of displaying, by the display device, a result of an evaluation comprehensively evaluated with respect to a utilization status of the assistance system based on operation states of the respective assistance functions.

According to the display control method according to the present invention, for the same reasons as described above, it is possible to make it easy for a user of the assistance system to grasp a utilization status of the assistance system.

A display control program according to the present invention is a program for controlling operation of a display device which displays information on an assistance system used for utilization of a host vehicle, the assistance system including a plurality of different assistance functions. The display control program according to the present invention is configured to display, by the display device, a result of an evaluation comprehensively evaluated with respect to a utilization status of the assistance system based on operation states of the respective assistance functions.

According to the display control program according to the present invention, for the same reasons as described above, it is possible to make it easy for a user of the assistance system to grasp a utilization status of the assistance system.

Constituent elements of the present invention are not limited to embodiments of the present invention described later with reference to the drawings. Other objects, other features, and accompanying advantages of the present invention will be readily understood from description of embodiments of the present invention.

### BRIEF DESCRIPTION OF DRAWINGS

[FIG. 1] FIG. 1 is a diagram showing a vehicle driving assistance apparatus including a display control apparatus according to an embodiment of the present invention.
[FIG. 2A] FIG. 2A is a diagram showing a scene in which a preceding vehicle exists.
[FIG. 2B] FIG. 2B is a diagram showing a scene in which a preceding vehicle does not exist.
[FIG. 3] FIG. 3 is a flowchart showing a routine executed by the vehicle driving assistance apparatus including the display control apparatus according to the embodiment of the present invention.
[FIG. 4] FIG. 4 is a diagram showing evaluation values and the like related to a coasting following travel function and an air resistance reduction travel function.
[FIG. 5] FIG. 5 is a diagram showing a comprehensive evaluation image.
[FIG. 6A] FIG. 6A is a diagram showing the comprehensive evaluation image when the comprehensive evaluation is a first evaluation (lowest evaluation).
[FIG. 6B] FIG. 6B is a diagram showing the comprehensive evaluation image when the comprehensive evaluation is a second evaluation.
[FIG. 6C] FIG. 6C is a diagram showing the comprehensive evaluation image when the comprehensive evaluation is a third evaluation.
[FIG. 6D] FIG. 6D is a diagram showing the comprehensive evaluation image when the comprehensive evaluation is a fourth evaluation.
[FIG. 6E] FIG. 6E is a diagram showing the comprehensive evaluation image when the comprehensive evaluation is a fifth evaluation (highest evaluation).
[FIG. 7] FIG. 7 is a diagram showing evaluation values and the like related to an air conditioner intensity setting function and an acceleration rate setting function.
[FIG. 8] FIG. 8 is a diagram showing evaluation values and the like related to a following travel control and a vehicle speed limit function.
[FIG. 9] FIG. 9 is a diagram showing evaluation values and the like related to the following travel control and the vehicle speed limit function.

### DESCRIPTION OF EMBODIMENTS

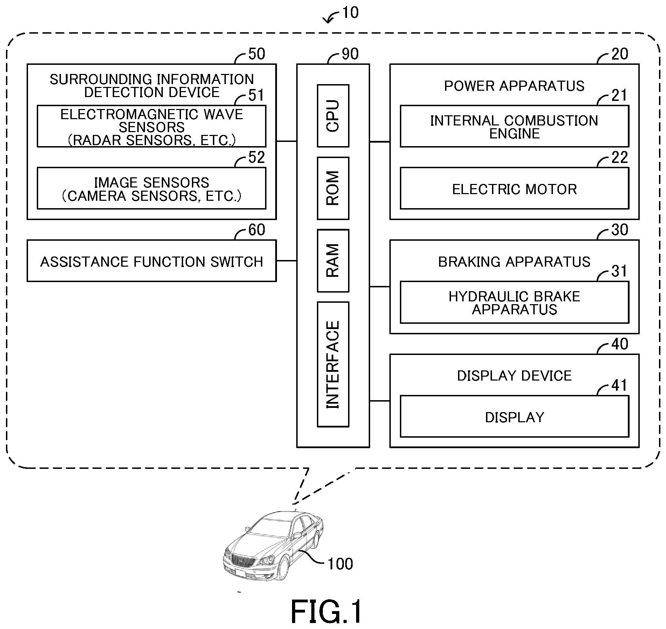

Hereinafter, a display control apparatus, a vehicle comprising the display control apparatus, a display control method, and a display control program according to an embodiment of the present invention will be described with reference to the drawings. FIG. 1 shows a vehicle driving assistance apparatus 10 according to an embodiment of the present invention. The display control apparatus according to the embodiment of the present invention is included in the vehicle driving assistance apparatus 10. However, the vehicle driving assistance apparatus 10 and the display control apparatus may be configured separately, and among functions of the vehicle driving assistance apparatus 10 described below, some functions (in particular, a function of controlling operation of a display device described later) may be performed by the display control apparatus, and the remaining functions may be performed by the vehicle driving assistance apparatus 10.

The vehicle driving assistance apparatus 10 is mounted on a host vehicle 100. Hereinafter, the vehicle driving assistance apparatus 10 will be described by taking, as an example, a case where an operator of the host vehicle 100 is a person who rides in the host vehicle 100 and drives the host vehicle 100 (that is, a driver of the host vehicle 100).

However, the operator of the host vehicle 100 may be a person who remotely drives the host vehicle 100 without riding in the host vehicle 100 (that is, a remote operator of the host vehicle 100). When the operator of the host vehicle 100 is a remote operator, the vehicle driving assistance apparatus 10 is mounted on each of the host vehicle 100 and remote operation equipment installed outside the host vehicle 100 for remotely driving the host vehicle 100, and functions of the vehicle driving assistance apparatus 10 described below are shared and performed by the vehicle driving assistance apparatus 10 mounted on the host vehicle 100 and the vehicle driving assistance apparatus 10 mounted on the remote operation equipment.

Further, the present invention is also applicable to a vehicle which travels by an automatic driving without requiring driving by a driver or a remote operator. Therefore, when the host vehicle 100 is a vehicle which travels by an automatic driving, display of a result of a comprehensive evaluation by a display device described later is performed for an occupant riding in the host vehicle 100 or a remote monitor who monitors traveling of the host vehicle 100 at the remote operation equipment.

As shown in FIG. 1, the vehicle driving assistance apparatus 10 has an ECU (electronic control unit) 90 as a control device. The ECU 90 includes a microcomputer as a main component. The microcomputer includes a CPU, storage medium such as ROM, RAM, and nonvolatile memory, and an interface. The CPU is configured to realize various functions by executing instructions, programs, or routines stored in the storage medium. In particular, in this example, the vehicle driving assistance apparatus 10 stores, in the storage medium, programs for realizing various controls executed by the vehicle driving assistance apparatus 10.

It should be noted that, in this example, the vehicle driving assistance apparatus 10 includes only one ECU 90. However, the vehicle driving assistance apparatus 10 may include a plurality of ECUs, and functions of the vehicle driving assistance apparatus 10 described below may be shared and performed by the respective ECUs.

Further, the vehicle driving assistance apparatus 10 may be configured such that programs stored in the storage medium can be updated (upgraded) by wireless communication (for example, Internet communication) with external devices.

The host vehicle 100 is equipped with a power apparatus 20, a braking apparatus 30, a display device 40, a surrounding information detection device 50, and an assistance function switch 60.

The power apparatus 20 is an apparatus which generates mechanical power applied to the host vehicle 100 (in particular, driven wheels of the host vehicle 100), and in this example includes an internal combustion engine 21 and at least one electric motor 22. The power apparatus 20 is electrically connected to the ECU 90. The vehicle driving assistance apparatus 10 can control mechanical power applied to the host vehicle 100 by controlling operation of the internal combustion engine 21 and the electric motor 22.

The braking apparatus 30 is an apparatus which applies braking force to the host vehicle 100 (in particular, wheels of the host vehicle 100), and in this example includes a hydraulic brake apparatus 31. The braking apparatus 30 is electrically connected to the ECU 90. The vehicle driving assistance apparatus 10 can control braking force applied to the host vehicle 100 by controlling operation of the hydraulic brake apparatus 31.

The display device 40 is a device which displays various images for the driver of the host vehicle 100, and in this example includes a display 41. The display device 40 is electrically connected to the ECU 90. The vehicle driving assistance apparatus 10 can display various images on the display 41 by the display device 40.

In particular, the display device 40 displays information on an assistance system described later which is used for utilization of the host vehicle 100, and the vehicle driving assistance apparatus 10 controls operation of the display device 40.

The surrounding information detection device 50 is a device which detects information on the surroundings of the host vehicle 100, and in this example includes electromagnetic wave sensors 51 and image sensors 52. The surrounding information detection device 50 is electrically connected to the ECU 90.

The electromagnetic wave sensor 51 is, for example, a radar sensor (millimeter-wave radar or the like), an acoustic sensor such as an ultrasonic sensor (clearance sonar), or an optical sensor such as a laser radar (LiDAR). The vehicle driving assistance apparatus 10 acquires, by the electromagnetic wave sensors 51, information on objects existing around the host vehicle 100 as surrounding detection information IS.

The image sensor 52 is, for example, a camera sensor. The vehicle driving assistance apparatus 10 acquires, by the image sensors 52, image information on the surroundings of the host vehicle 100 as the surrounding detection information IS.

The vehicle driving assistance apparatus 10 can acquire various information such as a distance from the host vehicle 100 to a preceding vehicle by using known methods based on the surrounding detection information IS.

The assistance function switch 60 is a device operated by the driver of the host vehicle 100 to activate or stop operation of various assistance functions of the assistance system. Therefore, the driver can activate or stop operation of each assistance function by operating the assistance function switch 60. Further, for an assistance function having a plurality of control modes, the driver can also cause the assistance function to operate in a specific control mode by operating the assistance function switch 60. In other words, the driver can select an operation state of the assistance function by operating the assistance function switch 60.

It should be noted that the assistance system is a system used for utilization of the host vehicle 100. In particular, the assistance system described below is a system which assists driving of the host vehicle 100 by the driver. Further, the assistance functions are functions which provide various assistance to a user who uses the display device 40 (a user of the display device 40). In particular, the assistance functions described below are functions which provide various assistance to the driver of the host vehicle 100. Further, the assistance functions may include an automatic driving function which automatically performs driving of the host vehicle 100. It should be noted that users of the display device 40 include, for example, occupants of the host vehicle 100 including the driver, a remote operator who remotely drives the host vehicle 100 at the remote operation equipment, and a remote monitor who monitors a state of the host vehicle 100 traveling by the automatic driving at the remote operation equipment.

In this example, the assistance system includes, as assistance functions, a normal following travel function, a coasting following travel function, an air resistance reduction travel function, an acceleration rate setting function, an air conditioner intensity setting function, a vehicle speed limit function, and a following travel function.

### <Normal Following Travel Function>

The normal following travel function is also called a normal following travel control or an adaptive cruise control, which is one type of the automatic driving, and is an assistance function which autonomously accelerates and decelerates the host vehicle 100. The normal following travel function is an assistance function having, as control modes, an off mode, a normal following travel mode, and a normal vehicle speed control mode.

The off mode of the normal following travel function is a mode in which operation of the normal following travel function is stopped.

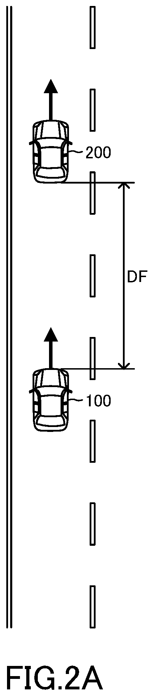

Further, the normal following travel mode of the normal following travel function is one of following travel modes in which the host vehicle 100 is autonomously accelerated and decelerated such that the host vehicle 100 travels following a preceding vehicle 200 when the preceding vehicle 200 exists as shown in FIG. 2A. More specifically, the normal following travel mode of the normal following travel function is a following travel mode in which the host vehicle 100 is caused to travel following the preceding vehicle 200 by autonomously accelerating and decelerating the host vehicle 100 such that an inter-vehicle distance DF (a distance between the preceding vehicle 200 and the host vehicle 100) is maintained at a target inter-vehicle distance DFtgt.

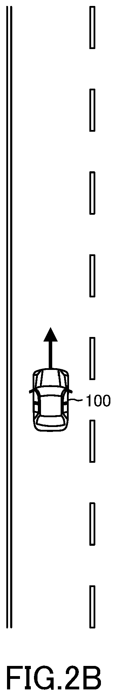

Further, the normal vehicle speed control mode of the normal following travel function is a vehicle speed control mode in which the host vehicle 100 is caused to travel by autonomously accelerating and decelerating the host vehicle 100 such that a traveling speed of the host vehicle 100 (host vehicle speed V) is maintained at a set vehicle speed Vset when the preceding vehicle 200 does not exist as shown in FIG. 2B.

It should be noted that the preceding vehicle 200 is another vehicle which travels in a host vehicle traveling lane (a lane in which the host vehicle 100 travels) within a predetermined distance DFpre ahead of the host vehicle 100. Further, the target inter-vehicle distance DFtgt is an inter-vehicle distance DF which is targeted in the normal following travel mode. It should be noted that the target inter-vehicle distance DFtgt is a distance shorter than the predetermined distance DFpre. Further, the set vehicle speed Vset is a host vehicle speed V which is targeted in the vehicle speed control mode.

The driver can select whether to set the normal following travel function to an operating state or a non-operating state (off mode) by operating the assistance function switch 60. In a situation where the normal following travel function is in the operating state, the vehicle driving assistance apparatus 10 operates the normal following travel function in the normal following travel mode when the preceding vehicle 200 exists, and operates the normal following travel function in the normal vehicle speed control mode when the preceding vehicle 200 does not exist.

### <Coasting Following Travel Function>

The coasting following travel function is also called a coasting following travel control, and is an assistance function which autonomously accelerates and decelerates the host vehicle 100. The coasting following travel function has, as control modes, an off mode, a coasting acceleration/deceleration mode, and a normal acceleration/deceleration mode. Further, the coasting acceleration/deceleration mode has, as control modes, a coasting following travel mode and a coasting vehicle speed control mode. Further, the normal acceleration/deceleration mode is an assistance function having, as control modes, a normal following travel mode and a normal vehicle speed control mode.

The off mode of the coasting following travel function is a mode in which operation of the coasting following travel function is stopped.

Further, the coasting following travel mode is one of following travel modes in which the host vehicle 100 is autonomously accelerated and decelerated such that the host vehicle 100 travels following the preceding vehicle 200. In particular, in this example, the coasting following travel mode has, as control modes, a coasting deceleration mode and an acceleration mode.

The coasting deceleration mode is a mode in which the host vehicle 100 is decelerated by causing the host vehicle 100 to coast. Further, the acceleration mode is a mode in which the host vehicle 100 is accelerated. In particular, the acceleration mode is an optimum acceleration mode in which the host vehicle 100 is accelerated by operating the power apparatus 20 with optimum energy efficiency.

When the coasting following travel function is operating in the acceleration mode of the coasting following travel mode and the inter-vehicle distance DF becomes short and reaches a lower limit value of a set inter-vehicle distance range Rdf, the control mode is switched from the acceleration mode to the coasting deceleration mode. On the other hand, when the coasting following travel function is operating in the coasting deceleration mode of the coasting following travel mode and the inter-vehicle distance DF becomes long and reaches an upper limit value of the set inter-vehicle distance range Rdf, the control mode is switched from the coasting deceleration mode to the acceleration mode.

Further, the coasting vehicle speed control mode is one of vehicle speed control modes in which the host vehicle 100 is caused to travel while being autonomously accelerated and decelerated such that the host vehicle speed V fluctuates within a set vehicle speed range Rv when the preceding vehicle 200 does not exist. In particular, in this example, the coasting vehicle speed control mode has, as control modes, a coasting deceleration mode and an acceleration mode.

Similarly to the coasting deceleration mode of the coasting following travel mode, the coasting deceleration mode of the coasting vehicle speed control mode is also a mode in which the host vehicle 100 is decelerated by causing the host vehicle 100 to coast. Further, similarly to the acceleration mode of the coasting following travel mode, the acceleration mode of the coasting vehicle speed control mode is also a mode in which the host vehicle 100 is accelerated. In particular, similarly to the acceleration mode of the coasting following travel mode, the acceleration mode of the coasting vehicle speed control mode is also an optimum acceleration mode in which the host vehicle 100 is accelerated by operating the power apparatus 20 with optimum energy efficiency.

When the coasting following travel function is operating in the acceleration mode of the coasting vehicle speed control mode and the host vehicle speed V becomes high and reaches an upper limit value of the set vehicle speed range Rv, the control mode is switched from the acceleration mode to the coasting deceleration mode. On the other hand, when the coasting following travel function is operating in the coasting deceleration mode of the coasting vehicle speed control mode and the host vehicle speed V becomes low and reaches a lower limit value of the set vehicle speed range Rv, the control mode is switched from the coasting deceleration mode to the acceleration mode.

Further, the normal following travel mode of the normal acceleration/deceleration mode of the coasting following travel function is the same mode as the normal following travel mode of the normal following travel function described above.

Further, the normal vehicle speed control mode of the normal acceleration/deceleration mode of the coasting following travel function is the same mode as the normal vehicle speed control mode of the normal following travel function described above.

The driver can select whether to set the coasting following travel function to an operating state or a non-operating state (off mode) by operating the assistance function switch 60.

In a situation where the coasting following travel function is in the operating state, the vehicle driving assistance apparatus 10 operates the coasting following travel function in the coasting acceleration/deceleration mode when a predetermined condition (executable condition Cexe) is satisfied, and operates the coasting following travel function in the normal acceleration/deceleration mode when the executable condition Cexe is not satisfied.

Further, in a situation where the vehicle driving assistance apparatus 10 operates the coasting following travel function in the coasting acceleration/deceleration mode, the vehicle driving assistance apparatus 10 operates the coasting following travel function in the coasting following travel mode when the preceding vehicle 200 exists, and operates the coasting following travel function in the coasting vehicle speed control mode when the preceding vehicle 200 does not exist.

Further, in a situation where the vehicle driving assistance apparatus 10 operates the coasting following travel function in the normal acceleration/deceleration mode, the vehicle driving assistance apparatus 10 operates the coasting following travel function in the normal following travel mode when the preceding vehicle 200 exists, and operates the coasting following travel function in the normal vehicle speed control mode when the preceding vehicle 200 does not exist.

The executable condition Cexe is, for example, a condition that a distance between the preceding vehicle 200 and a following vehicle is equal to or greater than a predetermined distance. The following vehicle is another vehicle which travels in the host vehicle traveling lane within a predetermined distance DRpre behind the host vehicle 100.

### <Air Resistance Reduction Travel Function>

The air resistance reduction travel function is an assistance function having, as control modes, at least an off mode and an air resistance reduction travel mode.

The off mode of the air resistance reduction travel function is a mode in which operation of the air resistance reduction travel function is stopped.

Further, the air resistance reduction travel mode is a mode in which a target inter-vehicle distance DFtgt is set such that an air resistance reduction effect on the host vehicle 100 by the preceding vehicle 200 is increased when the normal following travel function or the coasting following travel function is in an operating state.

When the host vehicle 100 is traveling following the preceding vehicle 200, as the inter-vehicle distance DF becomes shorter, air resistance received by the host vehicle 100 becomes smaller, and as a result, an amount of energy consumption of the host vehicle 100 becomes smaller. Further, when the host vehicle 100 is traveling following the preceding vehicle 200, as a vertical projected area VPA of the preceding vehicle 200 becomes larger, air resistance received by the host vehicle 100 becomes smaller, and as a result, an amount of energy consumption of the host vehicle 100 becomes smaller. However, when the inter-vehicle distance DF is extremely short, there is a possibility that the host vehicle 100 collides with the preceding vehicle 200, for example, when the preceding vehicle 200 suddenly decelerates.

From the above, more specifically, the air resistance reduction travel mode is a mode in which a target inter-vehicle distance DFtgt is set such that the target inter-vehicle distance DFtgt is appropriate for reducing air resistance received by the host vehicle 100 by causing the host vehicle 100 to travel behind the preceding vehicle 200 when the normal following travel function or the coasting following travel function is in an operating state, and the target inter-vehicle distance DFtgt prevents the host vehicle 100 from colliding with the preceding vehicle 200 due to sudden deceleration of the preceding vehicle 200 or the like when the host vehicle speed V is considered.

Since a risk that the host vehicle 100 collides with the preceding vehicle 200 becomes higher as the host vehicle speed V becomes higher, the target inter-vehicle distance DFtgt is set to a shorter distance as the host vehicle 100 becomes higher.

The target inter-vehicle distance DFtgt set by the air resistance reduction travel mode is used as the target inter-vehicle distance DFtgt in the normal following travel function and the coasting following travel function.

It should be noted that the vertical projected area VPA of the preceding vehicle 200 is an area of the preceding vehicle 200 projected onto a vertical plane perpendicular to a front-rear horizontal line of the preceding vehicle 200 (a line extending horizontally in a longitudinal direction of the preceding vehicle 200).

The driver can select whether to set the air resistance reduction travel function to an operating state or a non-operating state by operating the assistance function switch 60. When the air resistance reduction travel function is in an operating state, the vehicle driving assistance apparatus 10 operates the air resistance reduction travel function in the air resistance reduction travel mode.

### <Acceleration Setting Function>

The acceleration rate setting function is an assistance function having, as control modes, at least an off mode, a high acceleration rate mode (power mode), a normal acceleration rate mode (normal mode), and a low acceleration rate mode (eco mode).

The off mode of the acceleration rate setting function is a mode in which operation of the acceleration rate setting function is stopped. Further, the high acceleration rate mode is a mode in which the host vehicle 100 is accelerated with a relatively large acceleration rate with respect to a predetermined amount of change in an operation amount of an accelerator pedal of the host vehicle 100. Further, the normal acceleration rate mode is a mode in which the host vehicle 100 is accelerated with a medium (reference) acceleration rate with respect to a predetermined amount of change in the operation amount of the accelerator pedal. Further, the low acceleration rate mode is a mode in which the host vehicle 100 is accelerated with a relatively small acceleration rate with respect to a predetermined amount of change in the operation amount of the accelerator pedal.

The driver can select whether to set the acceleration rate setting function to an operating state or a non-operating state (off mode) by operating the assistance function switch 60. Further, the driver can select, by operating the assistance function switch 60, in which of the high acceleration rate mode, the normal acceleration rate mode, and the low acceleration rate mode the acceleration rate setting function is to be operated when the acceleration rate setting function is set to the operating state. When the acceleration rate setting function is set to the operating state, the vehicle driving assistance apparatus 10 operates the acceleration rate setting function in the selected control mode.

### <Air Conditioner Intensity Setting Function>

The air conditioner intensity setting function is an assistance function having, as control modes, at least an off mode, a weak mode, a medium mode, and a strong mode.

The off mode of the air conditioner intensity setting function is a mode in which operation of the air conditioner intensity setting function is stopped, that is, a mode in which operation of an air conditioner of the host vehicle 100 is stopped. Further, the weak mode is a mode in which the air conditioner is operated with low cooling/heating performance. Further, the medium mode is a mode in which the air conditioner is operated with medium cooling/heating performance. Further, the strong mode is a mode in which the air conditioner is operated with high cooling/heating performance.

The driver can select whether to set the air conditioner intensity setting function to an operating state or a non-operating state by operating the assistance function switch 60. Further, the driver can select, by operating the assistance function switch 60, in which of the strong mode, the medium mode, the weak mode, and the off mode the air conditioner intensity setting function is to be operated. When the air conditioner intensity setting function is set to the operating state, the vehicle driving assistance apparatus 10 operates the air conditioner intensity setting function in the selected control mode.

### <Vehicle Speed Limit Function>

The vehicle speed limit function is an assistance function having, as control modes, at least an off mode and a vehicle speed limit mode.

The off mode of the vehicle speed limit function is a mode in which operation of the vehicle speed limit function is stopped. Further, the vehicle speed limit mode is a mode in which the host vehicle speed V is controlled such that the host vehicle speed V does not become equal to or greater than a limit vehicle speed Vlimit.

The driver can select whether to set the vehicle speed limit function to an operating state or a non-operating state (off mode) by operating the assistance function switch 60. Further, the driver can set the limit vehicle speed Vlimit by operating the assistance function switch 60. When the vehicle speed limit function is set to the operating state, the vehicle driving assistance apparatus 10 operates the vehicle speed limit function in the vehicle speed limit mode.

### <Following Travel Function>

The following travel function is an assistance function having the normal following travel function and the coasting following travel function described above. Therefore, the following travel function is an assistance function having, as control modes, at least an off mode, the normal following travel mode described above, the normal vehicle speed control mode described above, the coasting acceleration/deceleration mode described above, and the normal acceleration/deceleration mode described above.

The off mode of the following travel function is a mode in which operation of the following travel function is stopped. In other words, the off mode of the following travel function is a mode in which operation of the normal following travel function and the coasting following travel function is stopped.

The driver can select whether to set the following travel function to an operating state or a non-operating state (off mode) by operating the assistance function switch 60. Further, the driver can select, by operating the assistance function switch 60, whether to set the normal following travel function to the operating state or to set the coasting following travel function to the operating state.

It should be noted that the assistance system may include, in addition to the assistance functions described above, assistance functions such as a lane keeping function, an automatic lane change function, an automatic passing function, an automatic diverging function, an automatic merging function, a lane departure warning function, a lane departure prevention function, a blind spot monitor function, an other-vehicle approach warning function, a pedestrian approach warning function, an automatic high beam switching function, an automatic headlight direction control function, an automatic headlight/fog lamp lighting function, an automatic wiper operation function, an automatic defroster operation function, an automatic presentation function of surrounding situation, an automatic start function at traffic congestion, an automatic hazard lamp lighting function, an automatic air conditioner inside air circulation switching function, an automatic seat position changing function, an automatic display function of traffic congestion information, an automatic video broadcasting function, an automatic audio volume adjustment function, and a jerk reduction travel function.

### <Lane Keeping Function>

The lane keeping function is an assistance function having, as control modes, at least an off mode and a lane keeping mode.

The off mode of the lane keeping function is a mode in which operation of the lane keeping function is stopped. Further, the lane keeping mode is a mode in which the host vehicle 100 is autonomously steered such that the host vehicle 100 returns to a center of a lane when the host vehicle 100 is separated from the center of the lane by a predetermined amount.

The driver can select whether to set the lane keeping function to an operating state or a non-operating state (off mode) by operating the assistance function switch 60. When the lane keeping function is set to the operating state, the vehicle driving assistance apparatus 10 operates the lane keeping function in the lane keeping mode.

### <Automatic Lane Change Function>

The automatic lane change function is an assistance function having, as control modes, at least an off mode and an automatic lane change mode.

The off mode of the automatic lane change function is a mode in which operation of the automatic lane change function is stopped. Further, the automatic lane change mode is a mode in which the host vehicle 100 is autonomously steered while being autonomously accelerated and decelerated as necessary such that a lane change of the host vehicle 100 is performed.

The driver can select whether to set the automatic lane change function to an operating state or a non-operating state (off mode) by operating the assistance function switch 60. When the automatic lane change function is set to the operating state, the vehicle driving assistance apparatus 10 operates the automatic lane change function in the automatic lane change mode.

### <Automatic Passing Function>

The automatic passing function is an assistance function having, as control modes, at least an off mode and an automatic passing mode.

The off mode of the automatic passing function is a mode in which operation of the automatic passing function is stopped. Further, the automatic passing mode is a mode in which the host vehicle 100 is autonomously steered while being autonomously accelerated and decelerated as necessary such that the host vehicle 100 passes the preceding vehicle 200.

The driver can select whether to set the automatic passing function to an operating state or a non-operating state (off mode) by operating the assistance function switch 60. When the automatic passing function is set to the operating state, the vehicle driving assistance apparatus 10 operates the automatic passing function in the automatic passing mode.

### <Automatic Diverging Function>

The automatic diverging function is an assistance function having, as control modes, at least an off mode and an automatic diverging mode.

The off mode of the automatic diverging function is a mode in which operation of the automatic diverging function is stopped. Further, the automatic diverging mode is a mode in which the host vehicle 100 is autonomously steered while being autonomously accelerated and decelerated as necessary such that the host vehicle 100 enters a lane (a diverging lane or a deceleration lane) which branches from a main lane of an expressway.

The driver can select whether to set the automatic diverging function to an operating state or a non-operating state (off mode) by operating the assistance function switch 60. When the automatic diverging function is set to the operating state, the vehicle driving assistance apparatus 10 operates the automatic diverging function in the automatic diverging mode.

### <Automatic Merging Function>

The automatic merging function is an assistance function having, as control modes, at least an off mode and an automatic merging mode.

The off mode of the automatic merging function is a mode in which operation of the automatic merging function is stopped. Further, the automatic merging mode is a mode in which the host vehicle 100 is autonomously steered while is autonomously accelerated and decelerated as necessary such that the host vehicle 100 enters a main lane of an expressway from a lane (a merging lane or an acceleration lane) which merges into the main lane of the expressway.

The driver can select whether to set the automatic merging function to an operating state or a non-operating state (off mode) by operating the assistance function switch 60. When the automatic merging function is set to the operating state, the vehicle driving assistance apparatus 10 operates the automatic merging function in the automatic merging mode.

### <Lane Departure Warning Function>

The lane departure warning function is an assistance function having, as control modes, at least an off mode and a lane departure warning mode.

The off mode of the lane departure warning function is a mode in which operation of the lane departure function is stopped. Further, the lane departure warning mode is a mode in which, by a known method, whether there is a possibility that the host vehicle 100 departs from a lane is monitored, and a warning is issued to the driver when it is determined that there is a possibility that the host vehicle 100 departs from the lane.

The driver can select whether to set the lane departure warning function to an operating state or a non-operating state (off mode) by operating the assistance function switch 60. When the lane departure warning function is set to the operating state, the vehicle driving assistance apparatus 10 operates the lane departure warning function in the lane departure warning mode.

### <Lane Departure Prevention Function>

The lane departure prevention function is an assistance function having, as control modes, at least an off mode and a lane departure prevention mode.

The off mode of the lane departure prevention function is a mode in which operation of the lane departure prevention function is stopped. Further, the lane departure prevention mode is a mode in which, by a known method, whether there is a possibility that the host vehicle 100 departs from a lane is monitored, and the host vehicle 100 is autonomously steered such that the host vehicle 100 heads toward a center of the lane when it is determined that there is a possibility that the host vehicle 100 departs from the lane.

The driver can select whether to set the lane departure prevention function to an operating state or a non-operating state (off mode) by operating the assistance function switch 60. When the lane departure prevention function is set to the operating state, the vehicle driving assistance apparatus 10 operates the lane departure prevention function in the lane departure prevention mode.

### <Blind Spot Monitor Function>

The blind spot monitor function is an assistance function having, as control modes, at least an off mode and a blind spot monitor mode.

The off mode of the blind spot monitor function is a mode in which operation of the blind spot monitor function is stopped. Further, the blind spot monitor mode is a mode in which images captured by blind spot monitors are displayed on the display device 40. The blind spot monitors are attached to the host vehicle 100 so as to be able to capture images of a region that becomes a blind spot of the driver or a region which is difficult for the driver to visually recognize.

The driver can select whether to set the blind spot monitor function to an operating state or a non-operating state (off mode) by operating the assistance function switch 60. When the blind spot monitor function is set to the operating state, the vehicle driving assistance apparatus 10 operates the blind spot monitor function in the blind spot monitor mode.

### <Other-Vehicle Approach Warning Function>

The other-vehicle approach warning function is an assistance function having, as control modes, at least an off mode and an other-vehicle approach warning mode.

The off mode of the other-vehicle approach warning function is a mode in which operation of the other-vehicle approach warning function is stopped. Further, the other-vehicle approach warning mode is a mode in which, by a known method, whether another vehicle which has approached within a predetermined distance range from the host vehicle 100 exists is monitored, and a warning is issued to the driver when it is determined that another vehicle which has approached within the predetermined distance range from the host vehicle 100 exists.

The driver can select whether to set the other-vehicle approach warning function to an operating state or a non-operating state (off mode) by operating the assistance function switch 60. When the other-vehicle approach warning function is set to the operating state, the vehicle driving assistance apparatus 10 operates the other-vehicle approach warning function in the other-vehicle approach warning mode.

### <Pedestrian Approach Warning Function>

The pedestrian approach warning function is an assistance function having, as control modes, at least an off mode and a pedestrian approach warning mode.

The off mode of the pedestrian approach warning function is a mode in which operation of the pedestrian approach warning function is stopped. Further, the pedestrian approach warning mode is a mode in which, by a known method, whether a pedestrian who has approached within a predetermined distance range from the host vehicle 100 exists is monitored, and a warning is issued to the driver when it is determined that a pedestrian who has approached within the predetermined distance range from the host vehicle 100 exists.

The driver can select whether to set the pedestrian approach warning function to an operating state or a non-operating state (off mode) by operating the assistance function switch 60. When the pedestrian approach warning function is set to the operating state, the vehicle driving assistance apparatus 10 operates the pedestrian approach warning function in the pedestrian approach warning mode.

### <Automatic High Beam Switching Function>

The automatic high beam switching function is an assistance function having, as control modes, at least an off mode and a high beam automatic switching mode.

The off mode of the automatic high beam switching function is a mode in which operation of the automatic high beam switching function is stopped. Further, the high beam automatic switching mode is a mode in which, by a known method, whether an oncoming vehicle or a pedestrian to be a target exists ahead of the host vehicle 100 is monitored, headlights are automatically switched from a high beam mode to a low beam mode and are turned on when it is determined that an oncoming vehicle or a pedestrian to be the target exists ahead of the host vehicle 100, and the headlights are automatically switched from the low beam mode to the high beam mode and are turned on when it is determined that an oncoming vehicle or a pedestrian to be the target does not exist ahead of the host vehicle 100.

The driver can select whether to set the automatic high beam switching function to an operating state or a non-operating state (off mode) by operating the assistance function switch 60. When the automatic high beam switching function is set to the operating state, the vehicle driving assistance apparatus 10 operates the automatic high beam switching function in the high beam automatic switching mode.

### <Automatic Headlight Direction Control Function>

The automatic headlight direction control function is an assistance function having, as control modes, at least an off mode and a headlight automatic direction control mode.

The off mode of the automatic headlight direction control function is a mode in which operation of the automatic headlight direction control function is stopped. Further, the headlight automatic direction control mode is a mode in which, by a known method, a situation ahead of the host vehicle 100 is acquired, and an irradiation direction of headlights of the host vehicle 100 is automatically changed to an appropriate direction in accordance with the situation.

The driver can select whether to set the automatic headlight direction control function to an operating state or a non-operating state by operating the assistance function switch 60. When the automatic headlight direction control function is set to the operating state, the vehicle driving assistance apparatus 10 operates the automatic headlight direction control function in the headlight automatic direction control mode.

### <Automatic Headlight/Fog Lamp Lighting Function>

The automatic headlight/fog lamp lighting function is an assistance function having, as control modes, at least an off mode and an automatic headlight/fog lamp lighting mode.

The off mode of the automatic headlight/fog lamp lighting function is a mode in which operation of the automatic headlight/fog lamp lighting function is stopped. Further, the automatic headlight/fog lamp lighting mode is a mode in which a situation around the host vehicle 100 (a vehicle surrounding situation) is monitored by a known method, the headlights are automatically turned on when it is determined based on the vehicle surrounding situation that it is necessary to turn on the headlights of the host vehicle 100, the headlights are automatically turn off when it is determined based on the vehicle surrounding situation that it is not necessary to turn on the headlights, fog lamps are automatically turned on when it is determined based on the vehicle surrounding situation that it is necessary to turn on the fog lamps of the host vehicle 100, and the fog lamps are automatically turned off when it is determined based on the vehicle surrounding situation that it is not necessary to turn on the fog lamps.

The driver can select whether to set the automatic headlight/fog lamp lighting function to an operating state or a non-operating state (off mode) by operating the assistance function switch 60. When the automatic headlight/fog lamp lighting function is set to the operating state, the vehicle driving assistance apparatus 10 operates the automatic headlight/fog lamp lighting function in the automatic headlight/fog lamp lighting mode.

### <Automatic Wiper Operation Function>

The automatic wiper operation function is an assistance function having, as control modes, at least an off mode and an automatic wiper operation mode.

The off mode of the automatic wiper operation function is a mode in which operation of the automatic wiper operation function is stopped. Further, the automatic wiper operation mode is a mode in which a situation around the host vehicle 100 (a vehicle surrounding situation) is monitored by a known method, wipers are automatically operated when it is determined based on the vehicle surrounding situation that it is necessary to operate the wipers of the host vehicle 100, and operation of the wipers are automatically stopped when it is determined based on the vehicle surrounding situation that it is not necessary to operate the wipers of the host vehicle 100.

The driver can select whether to set the automatic wiper operation function to an operating state or a non-operating state (off mode) by operating the assistance function switch 60. When the automatic wiper operation function is set to the operating state, the vehicle driving assistance apparatus 10 operates the automatic wiper operation function in the automatic wiper operation mode.

### <Automatic Defroster Operation Function>

The automatic defroster operation function is an assistance function having, as control modes, at least an off mode and an automatic defroster operation mode.

The off mode of the automatic defroster operation function is a mode in which operation of the automatic defroster operation function is stopped. Further, the automatic defroster operation mode is a mode in which states of a front windshield and a rear glass of the host vehicle 100 are monitored by a known method, a defroster is automatically operated when it is determined based on the glass states that it is necessary to operate the defroster of the host vehicle 100, and operation of the defroster is automatically stopped when it is determined based on the glass states that it is not necessary to operate the defroster of the host vehicle 100.

The driver can select whether to set the automatic defroster operation function to an operating state or a non-operating state (off mode) by operating the assistance function switch 60. When the automatic defroster operation function is set to the operating state, the vehicle driving assistance apparatus 10 operates the automatic defroster operation function in the automatic defroster operation mode.

### <Automatic Presentation Function Of Surrounding Situation>

The automatic presentation function of surrounding situation is an assistance function having, as control modes, at least an off mode and an automatic presentation mode of surrounding situation.

The off mode of the automatic presentation function of surrounding situation is a mode in which operation of the automatic presentation function of surrounding situation is stopped. Further, the automatic presentation mode of surrounding situation is a mode in which a situation around the host vehicle 100 is acquired by a known method, and the acquired situation is automatically presented to the driver by, for example, automatically displaying the acquired situation on the display device 40 as necessary.

The driver can select whether to set the automatic presentation function of surrounding situation to an operating state or a non-operating state (off mode) by operating the assistance function switch 60. When the automatic presentation function of surrounding situation is set to the operating state, the vehicle driving assistance apparatus 10 operates the automatic presentation function of surrounding situation in the automatic presentation mode of surrounding situation.

### <Automatic Start Function At Traffic Congestion>

The automatic start function at traffic congestion is an assistance function having, as control modes, at least an off mode and an automatic start mode at traffic congestion.

The off mode of the automatic start function at traffic congestion is a mode in which operation of the automatic start function at traffic congestion is stopped. Further, the automatic start mode at traffic congestion is a mode in which the host vehicle 100 is automatically started when, in a scene in which traffic congestion occurs ahead of the host vehicle 100, a situation occurs in which the host vehicle 100 which is stopped due to an influence of the traffic congestion can be started.

The driver can select whether to set the automatic start function at traffic congestion to an operating state or a non-operating state (off mode) by operating the assistance function switch 60. When the automatic start function at traffic congestion is set to the operating state, the vehicle driving assistance apparatus 10 operates the automatic start function at traffic congestion in the automatic start mode at traffic congestion.

### <Automatic Hazard Lamp Lighting Function>

The automatic hazard lamp lighting function is an assistance function having, as control modes, at least an off mode and an automatic hazard lamp lighting mode.

The off mode of the automatic hazard lamp lighting function is a mode in which operation of the automatic hazard lamp lighting function is stopped. Further, the automatic hazard lamp lighting mode is a mode in which, in a scene in which traffic congestion occurs ahead of the host vehicle 100, the hazard lamps of the host vehicle 100 are automatically turned on when the host vehicle 100 decelerates due to an influence of the traffic congestion and the host vehicle speed V becomes low, and thereafter the hazard lamps are automatically turned off.

The driver can select whether to set the automatic hazard lamp lighting function to an operating state or a non-operating state (off mode) by operating the assistance function switch 60. When the automatic hazard lamp lighting function is set to the operating state, the vehicle driving assistance apparatus 10 operates the automatic hazard lamp lighting function in the automatic hazard lamp lighting mode.

### <Automatic Air Conditioner Inside Air Circulation Switching Function>

The automatic air conditioner inside air circulation switching function is an assistance function having, as control modes, at least an off mode and an automatic air conditioner inside air circulation switching mode.

The off mode of the automatic air conditioner inside air circulation switching function is a mode in which operation of the automatic air conditioner inside air circulation switching function is stopped. Further, the automatic air conditioner inside air circulation switching mode is a mode in which, in a scene in which traffic congestion occurs ahead of the host vehicle 100, air circulation by an air conditioner of the host vehicle 100 is automatically switched from outside air circulation to inside air circulation when a switching condition Csw that the host vehicle 100 is stopped due to an influence of the traffic congestion or the host vehicle 100 is traveling at an extremely low speed is satisfied, and the air circulation by the air conditioner is automatically switched from inside air circulation to outside air circulation when the switching condition Csw is no longer satisfied.

The driver can select whether to set the automatic air conditioner inside air circulation switching function to an operating state or a non-operating state (off mode) by operating the assistance function switch 60. When the automatic air conditioner inside air circulation switching function is set to the operating state, the vehicle driving assistance apparatus 10 operates the automatic air conditioner inside air circulation switching function in the automatic air conditioner inside air circulation switching mode.

It should be noted that the outside air circulation is air circulation in which outside air is taken into an interior of the host vehicle 100 by the air conditioner, and air in the interior of the host vehicle 100 is discharged to an outside of the host vehicle 100. Further, the inside air circulation is air circulation in which air in the interior of the host vehicle 100 is taken in by the air conditioner, and the air is returned to the interior of the host vehicle 100.

### <Automatic Seat Position Changing Function>

The automatic seat position changing function is an assistance function having, as control modes, at least an off mode and an automatic seat position changing mode.

The off mode of the automatic seat position changing function is a mode in which operation of the automatic seat position changing function is stopped. Further, the automatic seat position changing mode is a mode in which a seat of a driver seat is automatically moved to a position appropriate for a scene in which traffic congestion occurs ahead of the host vehicle 100.

The driver can select whether to set the automatic seat position changing function to an operating state or a non-operating state (off mode) by operating the assistance function switch 60. When the automatic seat position changing function is set to the operating state, the vehicle driving assistance apparatus 10 operates the automatic seat position changing function in the automatic seat position changing mode.

### <Automatic Display Function Of Traffic Congestion Information>

The automatic display function of traffic congestion information is an assistance function having, as control modes, at least an off mode and an automatic display mode of traffic congestion information.

The off mode of the automatic display function of traffic congestion information is a mode in which operation of the automatic display function of traffic congestion information is stopped. Further, the automatic display mode of traffic congestion information is a mode in which, in a scene in which traffic congestion occurs ahead of the host vehicle 100, information regarding the traffic congestion is automatically displayed on the display device 40.

The driver can select whether to set the automatic display function of traffic congestion information to an operating state or a non-operating state (off mode) by operating the assistance function switch 60. When the automatic display function of traffic congestion information is set to the operating state, the vehicle driving assistance apparatus 10 operates the automatic display function of traffic congestion information in the automatic display mode of traffic congestion information.

### <Automatic Video Broadcasting Function>

The automatic video broadcasting function is an assistance function having, as control modes, at least an off mode and an automatic video broadcasting mode.

The off mode of the automatic video broadcasting function is a mode in which operation of the automatic video broadcasting function is stopped. Further, the automatic video broadcasting mode is a mode in which a video is automatically broadcasted when the host vehicle 100 is stopped due to an influence of traffic congestion in a scene in which traffic congestion occurs ahead of the host vehicle 100.

The driver can select whether to set the automatic video broadcasting function to an operating state or a non-operating state (off mode) by operating the assistance function switch 60. When the automatic video broadcasting function is set to the operating state, the vehicle driving assistance apparatus 10 operates the automatic video broadcasting function in the automatic video broadcasting mode.

### <Automatic Audio Volume Adjustment Function>

The automatic audio volume adjustment function is an assistance function having, as control modes, at least an off mode and an automatic audio volume adjustment mode.

The off mode of the automatic audio volume adjustment function is a mode in which operation of the automatic audio volume adjustment function is stopped. Further, the automatic audio volume adjustment mode is a mode in which, in a scene in which traffic congestion occurs ahead of the host vehicle 100, volume of audio of the host vehicle 100 is automatically adjusted in accordance with the host vehicle speed V.

The driver can select whether to set the automatic audio volume adjustment function to an operating state or a non-operating state (off mode) by operating the assistance function switch 60. When the automatic audio volume adjustment function is set to the operating state, the vehicle driving assistance apparatus 10 operates the automatic audio volume adjustment function in the automatic audio volume adjustment mode.

### <Jerk Reduction Travel Function>

The jerk reduction travel function is an assistance function having, as control modes, at least an off mode and a jerk reduction travel mode.

The off mode of the jerk reduction travel function is a mode in which operation of the jerk reduction travel function is stopped. Further, the jerk reduction travel mode is a mode in which, in a scene in which traffic congestion occurs ahead of the host vehicle 100, jerk (a rate of increase of acceleration) of the host vehicle 100 is automatically limited such that the jerk of the host vehicle 100 does not become equal to or greater than a predetermined value.

The driver can select whether to set the jerk reduction travel function to an operating state or a non-operating state (off mode) by operating the assistance function switch 60. When the jerk reduction travel function is set to the operating state, the vehicle driving assistance apparatus 10 operates the jerk reduction travel function in the jerk reduction travel mode.

### <Operation Of Vehicle Driving Assistance Apparatus>

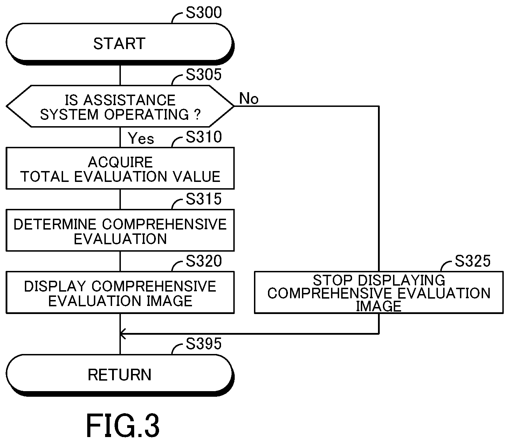

Next, operation of the vehicle driving assistance apparatus 10 will be described. The vehicle driving assistance apparatus 10 is configured to perform a comprehensive evaluation regarding a utilization status of the assistance system based on operation states of the respective assistance functions described above, and to display a result of the comprehensive evaluation by the display device 40 by executing a routine shown in FIG. 3 at predetermined calculation intervals.

### <Operation Example 1>

First, operation of the vehicle driving assistance apparatus 10 will be described in a case where assistance functions to be evaluated comprehensively by the vehicle driving assistance apparatus 10 are two functions, that is, the coasting following travel function and the air resistance reduction travel function.

When a predetermined timing arrives, the vehicle driving assistance apparatus 10 starts a process from a step S300 of the routine shown in FIG. 3, and proceeds with the process to a step S305 to determine whether the assistance system is operating, that is, whether at least one of the assistance functions to be evaluated comprehensively by the vehicle driving assistance apparatus 10 is operating. In this example, since the assistance functions to be evaluated comprehensively by the vehicle driving assistance apparatus 10 are two functions, that is, the coasting following travel function and the air resistance reduction travel function, the vehicle driving assistance apparatus 10 determines whether at least one of the coasting following travel function and the air resistance reduction travel function is operating.

When the vehicle driving assistance apparatus 10 determines "Yes" at the step S305, the vehicle driving assistance apparatus 10 proceeds with the process to a step S310 to acquire a total evaluation value EVtotal as described below.

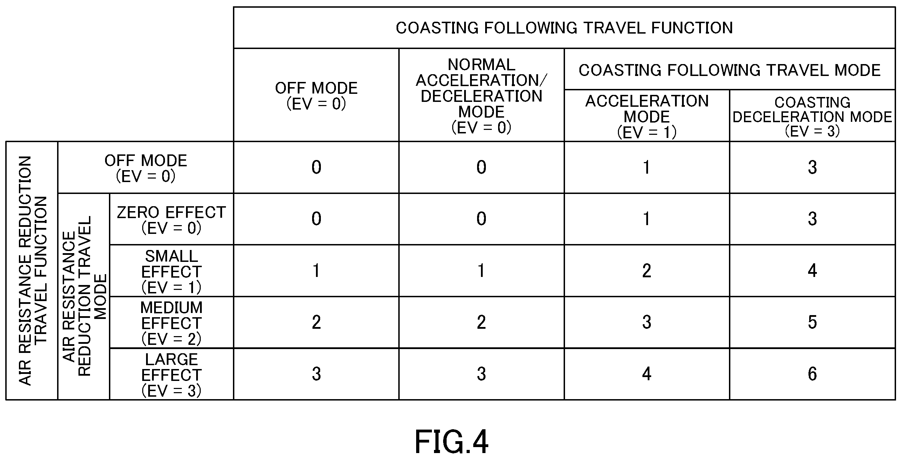

In this example, as shown in FIG. 4, an evaluation value EV is set for each operation state of each of the coasting following travel function and the air resistance reduction travel function. That is, for the coasting following travel function, an evaluation value EV is set for each operation state as follows.
(1) An evaluation value EV of "0" is set for an operation state in which the coasting following travel function is in the off mode. That is, an evaluation value EV of "0" is set for the off mode of the coasting following travel function.
(2) An evaluation value EV of "0" is set for an operation state in which the coasting following travel function is operating in the normal acceleration/deceleration mode. That is, an evaluation value EV of "0" is set for the normal acceleration/deceleration mode of the coasting following travel function.
(3) An evaluation value EV of "1" is set for an operation state in which the coasting following travel function is operating in the acceleration mode of the coasting following travel mode. That is, an evaluation value EV of "1" is set for the acceleration mode of the coasting following travel mode of the coasting following travel function.
(4) An evaluation value EV of "3" is set for an operation state in which the coasting following travel function is operating in the coasting deceleration mode of the coasting following travel mode. That is, an evaluation value EV of "3" is set for the coasting deceleration mode of the coasting following travel mode of the coasting following travel function.

A degree of contribution to reducing an amount of energy consumption of the host vehicle 100 is larger when the coasting following travel function is operating in the acceleration mode of the coasting following travel mode than when the coasting following travel function is operating in the normal acceleration/deceleration mode. That is, when the coasting following travel function is operating in the acceleration mode of the coasting following travel mode, since energy is consumed to accelerate the host vehicle 100, an amount of energy consumption of the host vehicle 100 at that time is relatively large. However, operation of the coasting following travel function in the acceleration mode of the coasting following travel mode is essential for subsequently operating the coasting following travel function in the coasting deceleration mode of the coasting following travel mode. That is, since the coasting following travel function can be subsequently operated in the coasting deceleration mode of the coasting following travel mode because the operation of the coasting following travel function in the acceleration mode of the coasting following travel mode is performed, it can be said that a degree of contribution to reducing an amount of energy consumption of the host vehicle 100 is larger when the coasting following travel function is operating in the acceleration mode of the coasting following travel mode than when the coasting following travel function is operating in the normal acceleration/deceleration mode. Therefore, the evaluation value EV for an operation state in which the coasting following travel function is operating in the acceleration mode of the coasting following travel mode is set to a higher value than the evaluation value EV for an operation state in which the coasting following travel function is operating in the normal acceleration/deceleration mode.

Further, a degree of contribution to reducing an amount of energy consumption of the host vehicle 100 is larger when the coasting following travel function is operating in the coasting deceleration mode of the coasting following travel mode than when the coasting following travel function is operating in the normal acceleration/deceleration mode or when the coasting following travel function is operating in the acceleration mode of the coasting following travel mode. Therefore, the evaluation value EV for an operation state in which the coasting following travel function is operating in the coasting deceleration mode of the coasting following travel mode is set to a higher value than the evaluation value EV for an operation state in which the coasting following travel function is operating in the normal acceleration/deceleration mode and the evaluation value EV for an operation state in which the coasting following travel function is operating in the acceleration mode of the coasting following travel mode.

Thus, for the coasting following travel function, the evaluation value EV is set to a higher value as a degree of contribution to reducing an amount of energy consumption of the host vehicle 100 becomes larger.

Further, as understood from the above description, an operation state of the coasting following travel function is a control mode executed by the coasting following travel function (the off mode, the normal acceleration/deceleration mode, the acceleration mode of the coasting following travel mode, and the coasting deceleration mode of the coasting following travel mode).

Further, as shown in FIG. 4, for the air resistance reduction travel function, an evaluation value EV is set for each operation state as follows.

In this example, an evaluation value EV for an operation state in which the air resistance reduction travel function is operating in the air resistance reduction travel mode is set based on an air resistance reduction effect.

The air resistance reduction effect is an effect of reducing air resistance received by the host vehicle 100 by the air resistance reduction travel function, and is an index indicating a degree of contribution to reducing an amount of energy consumption of the host vehicle 100. The air resistance reduction effect is determined in accordance with a traveling environment of the host vehicle 100. In this example, as the traveling environment of the host vehicle 100, the target inter-vehicle distance DFtgt and the vertical projected area VPA are adopted. It should be noted that, in addition to the target inter-vehicle distance DFtgt and the vertical projected area VPA, the host vehicle speed V may be adopted as the traveling environment of the host vehicle 100.

The air resistance reduction effect becomes larger as the target inter-vehicle distance DFtgt becomes shorter when the host vehicle speed V is the same, and becomes larger as the vertical projected area VPA becomes larger when the host vehicle speed V is the same. In this example, the air resistance reduction effect is classified into four kinds of effects (that is, a zero air resistance reduction effect, a small air resistance reduction effect, a medium air resistance reduction effect, and a large air resistance reduction effect) based on the target inter-vehicle distance DFtgt and the vertical projected area VPA.

Therefore, as shown in FIG. 4, the evaluation value EV for an operation state in which the air resistance reduction travel function is operating in the air resistance reduction travel mode is set as follows.
(1) An evaluation value EV of "0" is set for an operation state in which the air resistance reduction travel function is in the off mode. That is, an evaluation value EV of "0" is set for the off mode of the air resistance reduction travel function.
(2) An evaluation value EV of "0" is set for an operation state in which the air resistance reduction travel function is operating in the air resistance reduction travel mode in a state in which the air resistance reduction effect is a zero effect. That is, an evaluation value EV of "0" is set for the air resistance reduction travel mode of the air resistance reduction travel function in which the air resistance reduction effect becomes the zero effect. It should be noted that the zero effect means that there is no air resistance reduction effect (that is, the air resistance reduction effect is zero).
(3) An evaluation value EV of "1" is set for an operation state in which the air resistance reduction travel function is operating in the air resistance reduction travel mode in a state in which the air resistance reduction effect is a small effect. That is, an evaluation value EV of "1" is set for the air resistance reduction travel mode of the air resistance reduction travel function in which the air resistance reduction effect becomes the small effect. It should be noted that the small effect is an air resistance reduction effect larger than the zero effect.
(4) An evaluation value EV of "2" is set for an operation state in which the air resistance reduction travel function is operating in the air resistance reduction travel mode in a state in which the air resistance reduction effect is a medium effect. That is, an evaluation value EV of "2" is set for the air resistance reduction travel mode of the air resistance reduction travel function in which the air resistance reduction effect becomes the medium effect. It should be noted that the medium effect is an air resistance reduction effect larger than the small effect.
(5) An evaluation value EV of "3" is set for an operation state in which the air resistance reduction travel function is operating in the air resistance reduction travel mode in a state in which the air resistance reduction effect is a large effect. That is, an evaluation value EV of "3" is set for the air resistance reduction travel mode of the air resistance reduction travel function in which the air resistance reduction effect becomes the large effect. It should be noted that the large effect is an air resistance reduction effect larger than the medium effect.

Thus, for the air resistance reduction travel mode, the evaluation value EV is set to a higher value as a degree of contribution to reducing an amount of energy consumption of the host vehicle 100 becomes larger.

Further, as understood from the above description, an operation state of the air resistance reduction travel function is a control mode executed by the air resistance reduction travel (the off mode and the air resistance reduction travel mode).

Further, an operation state of the air resistance reduction travel function is a traveling environment of the host vehicle 100 realized by the air resistance reduction assistance function (assistance function).

The traveling environment of the host vehicle 100 is the vertical projected area VPA of the preceding vehicle 200 and the inter-vehicle distance DF when the air resistance reduction travel function is operating in the air resistance reduction travel mode.

Further, an evaluation value EV set for the air resistance reduction travel mode is generally higher when a predetermined traveling environment condition that the vertical projected area VPA is equal to or greater than a predetermined area VPAth and the inter-vehicle distance DF is less than a predetermined distance DFth is satisfied than when the predetermined traveling environment condition is not satisfied. Further, when the host vehicle speed V is also adopted as the traveling environment of the host vehicle 100, an evaluation value EV set for the air resistance reduction travel mode is generally higher when the predetermined traveling environment condition that the vertical projected area VPA is equal to or greater than the predetermined area VPAth and the inter-vehicle distance DF is less than the predetermined distance DFth is satisfied than when the predetermined traveling environment condition is not satisfied, when the host vehicle speed V is the same.

It should be noted that an evaluation value EV set for the air resistance reduction travel mode may be obtained from a lookup table using the vertical projected area VPA and the inter-vehicle distance DF as arguments, or may be obtained by calculation using a calculation formula using the vertical projected area VPA and the inter-vehicle distance DF as parameters. Further, when the host vehicle speed V is also adopted as the traveling environment of the host vehicle 100, an evaluation value EV may be obtained from a lookup table using the vertical projected area VPA, the inter-vehicle distance DF, and the host vehicle speed V as arguments, or may be obtained by calculation using a calculation formula using the vertical projected area VPA, the inter-vehicle distance DF, and the host vehicle speed V as parameters.

Further, an evaluation value EV set for the air resistance reduction travel mode is three or more kinds of values according to a combination of the vertical projected area VPA and the inter-vehicle distance DF. Further, when the host vehicle speed V is also adopted as the traveling environment of the host vehicle 100, an evaluation value EV set for the air resistance reduction travel mode is three or more kinds of values according to a combination of the vertical projected area VPA, the inter-vehicle distance DF, and the host vehicle speed V.

The vehicle driving assistance apparatus 10 acquires, as a total evaluation value EVtotal, a value obtained by totaling evaluation values EV set for the operation state of the coasting following travel function at that time and the operation state of the air resistance reduction travel function at that time.

For example, when the coasting following travel function is in an operation state in which the coasting following travel function is operating in the normal acceleration/deceleration mode, and the air resistance reduction travel function is in an operation state in which the air resistance reduction travel function is operating in the air resistance reduction travel mode in a state in which the air resistance reduction effect is zero, the total evaluation value EVtotal is "0".

Further, when the coasting following travel function is in an operation state in which the coasting following travel function is operating in the acceleration mode, and the air resistance reduction travel function is in an operation state in which the air resistance reduction travel function is operating in the air resistance reduction travel mode in a state in which the air resistance reduction effect is large, the total evaluation value EVtotal is "4".

Next, the vehicle driving assistance apparatus 10 proceeds with the process to a step S315 to determine a comprehensive evaluation (comprehensive evaluation) regarding the utilization status of the assistance system based on the total evaluation value EVtotal.

In this example, the comprehensive evaluation is evaluation in five levels from a lowest comprehensive evaluation (lowest evaluation) to a highest comprehensive evaluation (highest evaluation) (that is, a first evaluation, a second evaluation, a third evaluation, a fourth evaluation, and a fifth evaluation).

Then, (1) when the total evaluation value EVtotal is "0", the comprehensive evaluation is the first evaluation (lowest evaluation), (2) when the total evaluation value EVtotal is "1", the comprehensive evaluation is the second evaluation, (3) when the total evaluation value EVtotal is "2", the comprehensive evaluation is the third evaluation, (4) when the total evaluation value EVtotal is "3", the comprehensive evaluation is the fourth evaluation, and (5) when the total evaluation value EVtotal is equal to or greater than "4", the comprehensive evaluation is the fifth evaluation (highest evaluation).

Thus, since the comprehensive evaluation is the highest evaluation (fifth evaluation) when the total evaluation value EVtotal is equal to or greater than "4", in the example shown in FIG. 4, cases in which the comprehensive evaluation is the highest evaluation are the following four cases.
(1) A case where the coasting following travel function is in an operation state in which the coasting following travel function is operating in the acceleration mode, and the air resistance reduction travel function is in an operation state in which the air resistance reduction travel function is operating in the air resistance reduction travel mode in a state in which the air resistance reduction effect is large.
(2) A case where the coasting following travel function is in an operation state in which the coasting following travel function is operating in the coasting deceleration mode, and the air resistance reduction travel function is in an operation state in which the air resistance reduction travel function is operating in the air resistance reduction travel mode in a state in which the air resistance reduction effect is small.
(3) A case where the coasting following travel function is in an operation state in which the coasting following travel function is operating in the coasting deceleration mode, and the air resistance reduction travel function is in an operation state in which the air resistance reduction travel function is operating in the air resistance reduction travel mode in a state in which the air resistance reduction effect is medium.
(4) A case where the coasting following travel function is in an operation state in which the coasting following travel function is operating in the coasting deceleration mode, and the air resistance reduction travel function is in an operation state in which the air resistance reduction travel function is operating in the air resistance reduction travel mode in a state in which the air resistance reduction effect is large.

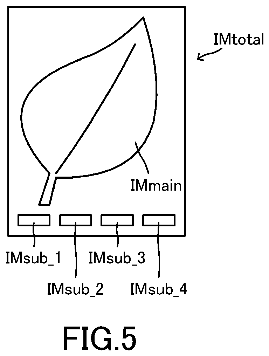

Next, the vehicle driving assistance apparatus 10 proceeds with the process to a step S320 to display, by the display device 40, an image representing the comprehensive evaluation (a comprehensive evaluation image IMtotal), and thereafter proceeds with the process to a step S395 to terminate the process of this routine once. In this example, the comprehensive evaluation image IMtotal is an image shown in FIG. 5.

The comprehensive evaluation image IMtotal shown in FIG. 5 includes a main image IMmain and four sub images IMsub (that is, a first sub image IMsub_1, a second sub image IMsub_2, a third sub image IMsub_3, and a fourth sub image IMsub_4). The main image IMmain is an image imitating a single leaf. Each sub image IMsub is a bar-shaped image, and the first sub image IMsub_1, the second sub image IMsub_2, the third sub image IMsub_3, and the fourth sub image IMsub_4 are arranged in a row from left to right.

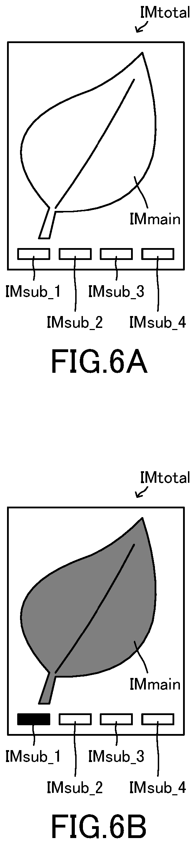

When the comprehensive evaluation is the first evaluation (lowest evaluation), as shown in FIG. 6A, the comprehensive evaluation image IMtotal is displayed in a form in which all of the main image IMmain and the first sub image IMsub_1, the second sub image IMsub_2, the third sub image IMsub_3, and the fourth sub image IMsub_4 are turned off.

Further, when the comprehensive evaluation is the second evaluation, as shown in FIG. 6B, the comprehensive evaluation image IMtotal is displayed in a form in which the main image IMmain and the first sub image IMsub_1 are turned on, and the second sub image IMsub_2, the third sub image IMsub_3, and the fourth sub image IMsub_4 are turned off.

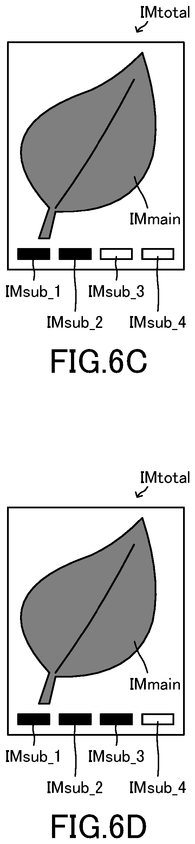

Further, when the comprehensive evaluation is the third evaluation, as shown in FIG. 6C, the comprehensive evaluation image IMtotal is displayed in a form in which the main image IMmain, the first sub image IMsub_1, and the second sub image IMsub_2 are turned on, and the third sub image IMsub_3 and the fourth sub image IMsub_4 are turned off.

Further, when the comprehensive evaluation is the fourth evaluation, as shown in FIG. 6D, the comprehensive evaluation image IMtotal is displayed in a form in which the main image IMmain, the first sub image IMsub_1, the second sub image IMsub_2, and the third sub image IMsub_3 are turned on, and the fourth sub image IMsub_4 is turned off.

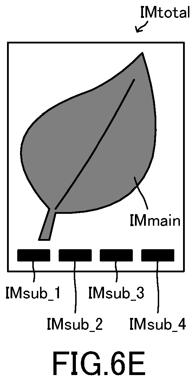

Further, when the comprehensive evaluation is the fifth evaluation (highest evaluation), as shown in FIG. 6E, the comprehensive evaluation image IMtotal is displayed in a form in which all of the main image IMmain and the first sub image IMsub_1, the second sub image IMsub_2, the third sub image IMsub_3, and the fourth sub image IMsub_4 are turned on.

On the other hand, when the vehicle driving assistance apparatus 10 determines "No" at the step S305, the vehicle driving assistance apparatus 10 proceeds with the process to a step S325 to stop displaying the comprehensive evaluation image IMtotal by the display device 40 when display of the comprehensive evaluation image IMtotal by the display device 40 is being performed at this time, and thereafter proceeds with the process to the step S395 to terminate the process of this routine once.

According to this, when the assistance system includes a plurality of assistance functions, that is, the coasting following travel function and the air resistance reduction travel function, utilization statuses of the coasting following travel function and the air resistance reduction travel function are not displayed by the display device 40, but utilization statuses of the coasting following travel function and the air resistance reduction travel function (that is, the utilization status of the assistance system) are put together into one and are displayed by the display device 40 as a comprehensive evaluation (the comprehensive evaluation image IMtotal). Therefore, the utilization status of the assistance system can be easily recognized by the driver (that is, a user of the assistance system).

As described above, in this example, the vehicle driving assistance apparatus 10 includes the display device 40 which displays an image to the driver of the host vehicle 100, and the ECU 90 which controls operation of the assistance system which assists driving of the host vehicle 100 by the driver. The assistance system includes a plurality of different assistance functions which assist driving of the host vehicle 100 by the driver, that is, the coasting following travel function and the air resistance reduction travel function. The ECU 90 is configured to perform a comprehensive evaluation (a comprehensive evaluation regarding the utilization status of the assistance system) based on operation states of the coasting following travel function and the air resistance reduction travel function, and to display the comprehensive evaluation (a result of the comprehensive evaluation) by the display device 40.

Further, in this example, when the assistance system is operating (that is, when at least one of the coasting following travel function and the air resistance reduction travel function is operating), the vehicle driving assistance apparatus 10 is configured to display the comprehensive evaluation (a result of a comprehensive evaluation regarding the utilization status of the assistance system) by the display device 40, and when operation of the assistance system is stopped (that is, when both the coasting following travel function and the air resistance reduction travel function do not operate), stop display of the comprehensive evaluation (the result of the comprehensive evaluation regarding the utilization status of the assistance system) by the display device 40.

Further, in the above-described example, the assistance system includes two assistance functions, that is, the coasting following travel function and the air resistance reduction travel function. An evaluation value EV is set for each operation state of each of the coasting following travel function and the air resistance reduction travel function. A sum of evaluation values EV set for current operation states of the coasting following travel function and the air resistance reduction travel function, that is, the total evaluation value EVtotal, is equal to or greater than a predetermined value (in the above-described example, when the total evaluation value EVtotal is equal to or greater than "4"), the comprehensive evaluation is the highest evaluation. Further, an evaluation value EV of "0" set for the air resistance reduction travel mode of the air resistance reduction travel function in which the air resistance reduction effect is the zero effect) is smaller than a second evaluation value (for example, "0") which is smaller than the first evaluation value, evaluation values EV are set for respective operation states of the coasting following travel function and the air resistance reduction travel function such that the total evaluation value EVtotal is not equal to or greater than a predetermined value (in the above-described example, such that the total evaluation value EVtotal is not equal to or greater than "4") even when an evaluation value EV set for a current operation state of one assistance function among the air conditioner intensity setting function and the acceleration rate setting function (in the above-described example, an evaluation value EV of "3" set for the off mode of the air conditioner intensity setting function) is a value equal to or greater than a first evaluation value (for example, "3"), when an evaluation value EV set for a current operation state of the other assistance function among the air conditioner intensity setting function and the acceleration rate setting function (in the above-described example.

Then, evaluation values EV are set for respective operation states of the coasting following travel function and the air resistance reduction travel function such that the total evaluation value EVtotal is equal to or greater than the predetermined value (in the above-described example, such that the total evaluation value EVtotal is equal to or greater than "4") when an evaluation value EV set for a current operation state of one assistance function (in the above-described example, an evaluation value EV of "3" set for the coasting deceleration mode of the coasting following travel function) is a value equal to or greater than the first evaluation value (for example, "3"), and an evaluation value EV set for a current operation state of the other assistance function (an evaluation value EV of "1" or "2" set for the air resistance reduction travel mode of the air resistance reduction travel function in which the air resistance reduction effect is the small effect or the medium effect) is a value smaller than the first evaluation value (for example, "3") but is a value equal to or greater than the second evaluation value (for example, "0").

Thus, a maximum evaluation value EV set for each assistance function is set to a value smaller than at least the total evaluation value EVtotal at which the comprehensive evaluation is the highest evaluation. That is, "3", which is the maximum evaluation value EV set for the coasting following travel function, is set to a value smaller than "4", which is the total evaluation value EVtotal at which the comprehensive evaluation is the highest evaluation. Similarly, "3", which is the maximum evaluation value EV set for the air resistance reduction travel function, is also set to a value smaller than "4", which is the total evaluation value EVtotal at which the comprehensive evaluation is the highest evaluation.

Further, the coasting following travel function is a function for autonomously accelerating and decelerating the host vehicle 100, and has the coasting acceleration/deceleration mode and the normal acceleration/deceleration mode as control modes. The coasting acceleration/deceleration mode is a control mode in which the host vehicle 100 is autonomously accelerated and decelerated such that, when the preceding vehicle 200 exists ahead of the host vehicle 100, the inter-vehicle distance DF fluctuates between the upper limit value and the lower limit value of the set inter-vehicle distance range Rdf, and is a control mode in which the host vehicle 100 is decelerated by causing the host vehicle 100 to coast. On the other hand, the normal acceleration/deceleration mode is a control mode in which the host vehicle 100 is autonomously accelerated and decelerated such that, when the preceding vehicle 200 exists, the inter-vehicle distance DF is maintained at the target inter-vehicle distance DFtgt. An evaluation value EV set for the normal acceleration/deceleration mode is lower than an evaluation value EV set for the coasting acceleration/deceleration mode.

Moreover, the evaluation value EV set for the normal acceleration/deceleration mode of the coasting following travel function is "0".

Further, the coasting acceleration/deceleration mode of the coasting following travel function has the acceleration mode and the coasting deceleration mode. The acceleration mode of the coasting acceleration/deceleration mode is a mode in which the host vehicle 100 is accelerated, and the coasting deceleration mode of the coasting acceleration/deceleration mode is a mode in which the host vehicle 100 is decelerated by causing the host vehicle 100 to coast. An evaluation value EV set for the acceleration mode of the coasting acceleration/deceleration mode is higher than an evaluation value EV set for the normal acceleration/deceleration mode of the coasting following travel function, and an evaluation value EV set for the coasting deceleration mode of the coasting acceleration/deceleration mode is higher than an evaluation value EV set for the acceleration mode of the coasting acceleration/deceleration mode.

Further, the comprehensive evaluation is the highest evaluation when the total evaluation value EVtotal is equal to or greater than the predetermined value EVth (in the above-described example, when the total evaluation value EVtotal is equal to or greater than "4"), and a maximum value of evaluation values EV set for the coasting deceleration mode of the coasting following travel mode of the coasting following travel function and the air resistance reduction travel mode of the air resistance reduction travel function is a largest value in a range smaller than the predetermined value EVth (in the above-described example, "3", which is a largest value in a range smaller than "4").

### <Operation Example 2>

Further, when assistance functions to be evaluated comprehensively by the vehicle driving assistance apparatus 10 are two functions, that is, the air conditioner intensity setting function and the acceleration rate setting function, for example, the vehicle driving assistance apparatus 10 operates as follows.

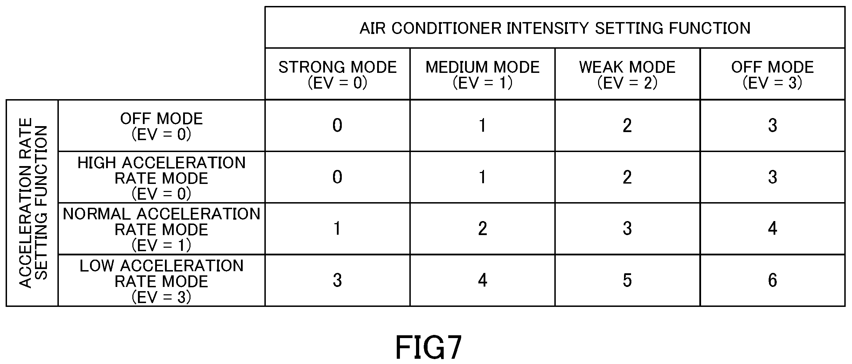

In this example, as shown in FIG. 7, an evaluation value EV is set for each operation state of each of the air conditioner intensity setting function and the acceleration rate setting function. That is, for the air conditioner intensity setting function, an evaluation value EV is set for each operation state as follows.
(1) An evaluation value EV of "0" is set for an operation state in which the air conditioner intensity setting function is in the off mode. That is, an evaluation value EV of "0" is set for the off mode of the air conditioner intensity setting function.
(2) An evaluation value EV of "0" is set for an operation state in which the air conditioner intensity setting function is operating in the strong mode. That is, an evaluation value EV of "0" is set for the strong mode of the air conditioner intensity setting function.
(3) An evaluation value EV of "1" is set for an operation state in which the air conditioner intensity setting function is operating in the medium mode. That is, an evaluation value EV of "1" is set for the medium mode of the air conditioner intensity setting function.
(4) An evaluation value EV of "2" is set for an operation state in which the air conditioner intensity setting function is operating in the weak mode. That is, an evaluation value EV of "2" is set for the weak mode of the air conditioner intensity setting function.
(5) An evaluation value EV of "3" is set for an operation state in which the air conditioner intensity setting function is in the off mode (that is, an operation state in which the air conditioner intensity setting function is not operating). That is, an evaluation value EV of "3" is set for the off mode of the air conditioner intensity setting function.

A degree of contribution to reducing an amount of energy consumption of the host vehicle 100 is larger when the air conditioner intensity setting function is operating in the medium mode than when the air conditioner intensity setting function is operating in the strong mode. Therefore, the evaluation value EV for an operation state in which the air conditioner intensity setting function is operating in the medium mode is set to a higher value than the evaluation value EV for an operation state in which the air conditioner intensity setting function is operating in the strong mode.

Similarly, a degree of contribution to reducing an amount of energy consumption of the host vehicle 100 is larger when the air conditioner intensity setting function is operating in the weak mode than when the air conditioner intensity setting function is operating in the medium mode. Therefore, the evaluation value EV for an operation state in which the air conditioner intensity setting function is operating in the weak mode is set to a higher value than the evaluation value EV for an operation state in which the air conditioner intensity setting function is operating in the medium mode.

Similarly, a degree of contribution to reducing an amount of energy consumption of the host vehicle 100 is larger when the air conditioner intensity setting function is in the off mode than when the air conditioner intensity setting function is operating in the weak mode. Therefore, the evaluation value EV for an operation state in which the air conditioner intensity setting function is in the off mode is set to a higher value than the evaluation value EV for an operation state in which the air conditioner intensity setting function is operating in the weak mode.

Thus, for the air conditioner intensity setting function, the evaluation value EV is set to a higher value as a degree of contribution to reducing an amount of energy consumption of the host vehicle 100 becomes larger.

Further, as understood from the above description, an operation state of the air conditioner intensity setting function is a control mode executed by the air conditioner intensity setting function (the off mode, the weak mode, the medium mode, and the strong mode).

Further, as shown in FIG. 7, for the acceleration rate setting function, an evaluation value EV is set for each operation state as follows.
(1) An evaluation value EV of "0" is set for an operation state in which the acceleration rate setting function is in the off mode. That is, an evaluation value EV of "0" is set for the off mode of the acceleration rate setting function.
(2) An evaluation value EV of "0" is set for an operation state in which the acceleration rate setting function is operating in the high acceleration rate mode. That is, an evaluation value EV of "0" is set for the high acceleration rate mode of the acceleration rate setting function.
(3) An evaluation value EV of "1" is set for an operation state in which the acceleration rate setting function is operating in the normal acceleration rate mode. That is, an evaluation value EV of "1" is set for the normal acceleration rate mode of the acceleration rate setting function.
(4) An evaluation value EV of "3" is set for an operation state in which the acceleration rate setting function is operating in the low acceleration rate mode. That is, an evaluation value EV of "3" is set for the low acceleration rate mode of the acceleration rate setting function.

In general, an amount of energy consumption of the host vehicle 100 becomes smaller as the acceleration rate of the host vehicle 100 for the same operation amount of the accelerator pedal becomes smaller.

Therefore, a degree of contribution to reducing an amount of energy consumption of the host vehicle 100 is larger when the acceleration rate setting function is operating in the normal acceleration rate mode than when the acceleration rate setting function is operating in the high acceleration rate mode. Therefore, the evaluation value EV for an operation state in which the acceleration rate setting function is operating in the normal acceleration rate mode is set to a higher value than the evaluation value EV for an operation state in which the acceleration rate setting function is operating in the high acceleration rate mode.

Similarly, a degree of contribution to reducing an amount of energy consumption of the host vehicle 100 is larger when the acceleration rate setting function is operating in the low acceleration rate mode than when the acceleration rate setting function is operating in the normal acceleration rate mode. Therefore, the evaluation value EV for an operation state in which the acceleration rate setting function is operating in the low acceleration rate mode is set to a higher value than the evaluation value EV for an operation state in which the acceleration rate setting function is operating in the normal acceleration rate mode.

Thus, for the acceleration rate setting mode, the evaluation value EV is set to a higher value as a degree of contribution to reducing an amount of energy consumption of the host vehicle 100 becomes larger.

Further, as understood from the above description, an operation state of the acceleration rate setting function is a control mode executed by the acceleration rate setting function (the off mode, the high acceleration rate mode, the normal acceleration rate mode, and the low acceleration rate mode).

The vehicle driving assistance apparatus 10 acquires, as the total evaluation value EVtotal, a value obtained by totaling evaluation values EV set for the operation state of the air conditioner intensity setting function at that time and the operation state of the acceleration rate setting function at that time.

For example, when the air conditioner intensity setting function is in an operation state in which the air conditioner intensity setting function is operating in the strong mode, and the acceleration rate setting function is in an operation state in which the acceleration rate setting function is operating in the high acceleration rate mode, the total evaluation value EVtotal is "0".

On the other hand, when the air conditioner intensity setting function is in an operation state in which the air conditioner intensity setting function is operating in the weak mode, and the acceleration rate setting function is in an operation state in which the acceleration rate setting function is operating in the low acceleration rate mode, the total evaluation value EVtotal is "5".

It should be noted that, as described above, in this example, when the total evaluation value EVtotal is equal to or greater than "4", the comprehensive evaluation is the highest evaluation. Therefore, in the example shown in FIG. 7, cases in which the comprehensive evaluation is the highest evaluation are the following four cases.
(1) A case where the air conditioner intensity setting function is in an operation state in which the air conditioner intensity setting function is operating in the medium mode, and the acceleration rate setting function is in an operation state in which the acceleration rate setting function is operating in the low acceleration rate mode.
(2) A case where the air conditioner intensity setting function is in an operation state in which the air conditioner intensity setting function is operating in the weak mode, and the acceleration rate setting function is in an operation state in which the acceleration rate setting function is operating in the low acceleration rate mode.
(3) A case where the air conditioner intensity setting function is in an operation state in which the air conditioner intensity setting function is in the off mode, and the acceleration rate setting function is in an operation state in which the acceleration rate setting function is operating in the normal acceleration rate mode.
(4) A case where the air conditioner intensity setting function is in an operation state in which the air conditioner intensity setting function is in the off mode, and the acceleration rate setting function is in an operation state in which the acceleration rate setting function is operating in the low acceleration rate mode.

Then, the vehicle driving assistance apparatus 10 notifies the driver of the comprehensive evaluation by displaying, by the display device 40, the comprehensive evaluation image IMtotal corresponding to the comprehensive evaluation.

According to this, when the assistance system includes a plurality of assistance functions, that is, the air conditioner intensity setting function and the acceleration rate setting function, utilization statuses of the air conditioner intensity setting function and the acceleration rate setting function are not displayed by the display device 40, but utilization statuses of the air conditioner intensity setting function and the acceleration rate setting function (that is, the utilization status of the assistance system) are put together into one and are displayed by the display device 40 as a comprehensive evaluation (the comprehensive evaluation image IMtotal). Therefore, the utilization status of the assistance system can be easily recognized by the driver (that is, a user of the assistance system).

As described above, in this example, the vehicle driving assistance apparatus 10 includes the display device 40 which displays an image to the driver of the host vehicle 100, and the ECU 90 which controls operation of the assistance system which assists driving of the host vehicle 100 by the driver. The assistance system includes a plurality of different assistance functions which assist driving of the host vehicle 100 by the driver, that is, the air conditioner intensity setting function and the acceleration rate setting function. The ECU 90 is configured to perform a comprehensive evaluation (a comprehensive evaluation regarding the utilization status of the assistance system) based on operation states of the air conditioner intensity setting function and the acceleration rate setting function, and to display the comprehensive evaluation (a result of the comprehensive evaluation) by the display device 40.

Further, in this example, when the assistance system is operating (that is, when at least one of the air conditioner intensity setting function and the acceleration rate setting function is operating), the vehicle driving assistance apparatus 10 is configured to display the comprehensive evaluation (a result of a comprehensive evaluation regarding the utilization status of the assistance system) by the display device 40, and when operation of the assistance system is stopped (that is, when both the air conditioner intensity setting function and the acceleration rate setting function are not operating), stop displaying the comprehensive evaluation (the result of the comprehensive evaluation regarding the utilization status of the assistance system) by the display device 40.

Further, in the above-described example, the assistance system includes two assistance functions, that is, the air conditioner intensity setting function and the acceleration rate setting function. An evaluation value EV is set for each operation state of each of the air conditioner intensity setting function and the acceleration rate setting function. A sum of evaluation values EV set for current operation states of the air conditioner intensity setting function and the acceleration rate setting function, that is, the total evaluation value EVtotal, is equal to or greater than a predetermined value (in the above-described example, when the total evaluation value EVtotal is equal to or greater than "4"), the comprehensive evaluation is the highest evaluation. Further, an evaluation value EV of "0" set for the off mode and the high acceleration rate mode of the acceleration rate setting function) is smaller than a second evaluation value (for example, "0") which is smaller than the first evaluation value, evaluation values EV are set for respective operation states of the air conditioner intensity setting function and the acceleration rate setting function such that the total evaluation value EVtotal is not equal to or greater than the predetermined value (in the above-described example, such that the total evaluation value EVtotal is not equal to or greater than "4") even when an evaluation value EV set for a current operation state of one assistance function among the air conditioner intensity setting function and the acceleration rate setting function (in the above-described example, an evaluation value EV of "3" set for the off mode of the air conditioner intensity setting function) is a value equal to or greater than a first evaluation value (for example, "3"), when an evaluation value EV set for a current operation state of the other assistance function among the air conditioner intensity setting function and the acceleration rate setting function (in the above-described example.

Then, evaluation values EV are set for respective operation states of the air conditioner intensity setting function and the acceleration rate setting function such that the total evaluation value EVtotal is equal to or greater than the predetermined value (in the above-described example, such that the total evaluation value EVtotal is equal to or greater than "4") when an evaluation value EV set for a current operation state of one assistance function (in the above-described example, an evaluation value EV of "3" set for the off mode of the air conditioner intensity setting) is a value equal to or greater than the first evaluation value (for example, "3"), and an evaluation value EV set for a current operation state of the other assistance function (in the above-described example, an evaluation value EV of "1" set for the normal acceleration rate mode of the acceleration rate setting function) is a value smaller than the first evaluation value (for example, "3") but is a value equal to or greater than the second evaluation value (for example, "0").

Thus, a maximum evaluation value EV set for each assistance function is set to a value smaller than at least the total evaluation value EVtotal at which the comprehensive evaluation is the highest evaluation. That is, "3", which is the maximum evaluation value EV set for the air conditioner intensity setting function, is set to a value smaller than "4", which is the total evaluation value EVtotal at which the comprehensive evaluation becomes the highest evaluation. Similarly, "3", which is the maximum evaluation value EV set for the acceleration rate setting function, is also set to a value smaller than "4", which is the total evaluation value EVtotal at which the comprehensive evaluation is the highest evaluation.

Further, the comprehensive evaluation is the highest evaluation when the total evaluation value EVtotal is equal to or greater than the predetermined value EVth (in the above-described example, when the total evaluation value EVtotal is equal to or greater than "4"), and a maximum value of evaluation values EV set for the off mode of the air conditioner intensity setting function and the low acceleration rate mode of the acceleration rate setting function is a largest value in a range smaller than the predetermined value EVth (in the above-described example, "3", which is a largest value in a range smaller than "4").

### <Operation Example 3>

When the two assistance functions to be comprehensively evaluated by the vehicle driving assistance apparatus 10 are two functions, that is, the following travel function and the vehicle speed limit function, for example, the vehicle driving assistance apparatus 10 operates as follows.

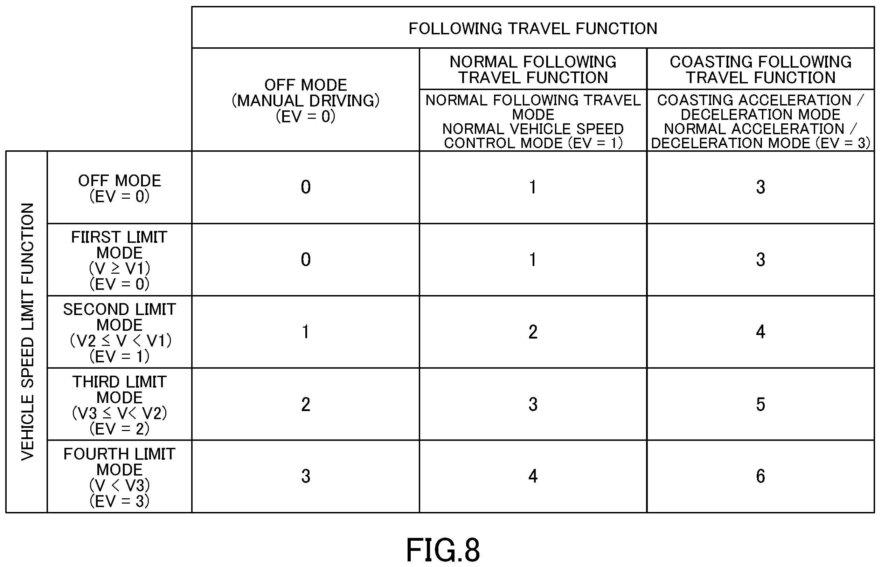

In this example, as shown in FIG. 8, an evaluation value EV is set for each operation state of each of the following travel function and the vehicle speed limit function. That is, for the following travel function, an evaluation value EV is set for each operation state as follows.
(1) An evaluation value EV of "0" is set for an operation state in which the following travel function is in the off mode (that is, a state in which the host vehicle 100 is traveling by manual driving by the driver). That is, an evaluation value EV of "0" is set for the off mode of the following travel function.
(2) An evaluation value EV of "1" is set for an operation state in which the normal following travel function is operating in the normal following travel mode or the normal vehicle speed control mode. That is, an evaluation value EV of "1" is set for the normal following travel mode or the normal vehicle speed control mode of the normal following travel function.
(3) An evaluation value EV of "3" is set for an operation state in which the coasting following travel function is operating in the coasting acceleration/deceleration mode or the normal acceleration/deceleration mode. That is, an evaluation value EV of "3" is set for the coasting acceleration/deceleration mode or the normal acceleration/deceleration mode of the coasting following travel function.

In general, an amount of energy consumption of the host vehicle 100 is smaller when the host vehicle 100 is traveling by the normal following travel function than when the host vehicle 100 is traveling by manual driving by the driver.

Therefore, a degree of contribution to reducing an amount of energy consumption of the host vehicle 100 is larger when the normal following travel function is operating than when the host vehicle 100 is traveling by manual driving by the driver (that is, when the following travel function is in the off mode). Therefore, the evaluation value EV for the operation state in which the normal following travel function is operating is set to a higher value than the evaluation value EV for the state in which the host vehicle 100 is traveling by manual driving by the driver (that is, the operation state in which the following travel function is in the off mode).

Further, an amount of energy consumption of the host vehicle 100 is smaller when the host vehicle 100 is traveling by the coasting following travel function than when the host vehicle 100 is traveling by the normal following travel function.

Therefore, a degree of contribution to reducing an amount of energy consumption of the host vehicle 100 is larger when the coasting following travel function is operating than when the normal following travel function is operating. Therefore, the evaluation value EV for the operation state in which the coasting following travel function is operating is set to a higher value than the evaluation value EV for the operation state in which the normal following travel function is operating.

Thus, for the following travel function, the evaluation value EV is set to a higher value as a degree of contribution to reducing an amount of energy consumption of the host vehicle 100 becomes larger.

Further, as understood from the above description, an operation state of the following travel function is a control mode executed by the following travel function (the off mode, the normal following travel mode, the normal vehicle speed control mode, the coasting following travel mode, and the coasting vehicle speed control mode).

Further, as shown in FIG. 8, for the vehicle speed limit function, an evaluation value EV is set for each operation state as follows.
(1) An evaluation value EV of "0" is set for an operation state in which the vehicle speed limit function is in the off mode. That is, an evaluation value EV of "0" is set for the off mode of the vehicle speed limit function.
(2) An evaluation value EV of "0" is set for an operation state in which the vehicle speed limit function is operating in a first limit mode of the vehicle speed limit mode. That is, an evaluation value EV of "0" is set for the first limit mode of the vehicle speed limit mode of the vehicle speed limit function. The first limit mode is a mode in which a vehicle speed limit Vlimit in the vehicle speed limit mode of the vehicle speed limit function is set to a vehicle speed equal to or higher than a first vehicle speed V1.
(3) An evaluation value EV of "1" is set for an operation state in which the vehicle speed limit function is operating in a second limit mode of the vehicle speed limit mode. That is, an evaluation value EV of "1" is set for the second limit mode of the vehicle speed limit mode of the vehicle speed limit function. The second limit mode is a mode in which the vehicle speed limit Vlimit in the vehicle speed limit mode of the vehicle speed limit function is set to a vehicle speed equal to or higher than a second vehicle speed V2 and lower than the first vehicle speed V1. The second vehicle speed V2 is a vehicle speed lower than the first vehicle speed V1.
(4) An evaluation value EV of "2" is set for an operation state in which the vehicle speed limit function is operating in a third limit mode of the vehicle speed limit mode. That is, an evaluation value EV of "2" is set for the third limit mode of the vehicle speed limit mode of the vehicle speed limit function. The third limit mode is a mode in which the vehicle speed limit Vlimit in the vehicle speed limit mode of the vehicle speed limit function is set to a vehicle speed equal to or higher than a third vehicle speed V3 and lower than the second vehicle speed V2. It should be noted that the third vehicle speed V3 is a vehicle speed lower than the second vehicle speed V2.
(5) An evaluation value EV of "3" is set for an operation state in which the vehicle speed limit function is operating in a fourth limit mode of the vehicle speed limit mode. That is, an evaluation value EV of "3" is set for the fourth limit mode of the vehicle speed limit mode of the vehicle speed limit function. The fourth limit mode is a mode in which the vehicle speed limit Vlimit in the vehicle speed limit mode of the vehicle speed limit function is set to a vehicle speed lower than the third vehicle speed V3.

An amount of energy consumption of the host vehicle 100 becomes generally smaller as the host vehicle speed V becomes lower. Therefore, a degree of contribution to reducing an amount of energy consumption of the host vehicle 100 is larger when the vehicle speed limit function is operating in the second limit mode than when the vehicle speed limit function is operating in the first limit mode. Therefore, the evaluation value EV for the operation state in which the vehicle speed limit function is operating in the second limit mode is set to a higher value than the evaluation value EV for the operation state in which the vehicle speed limit function is operating in the first limit mode.

Similarly, a degree of contribution to reducing an amount of energy consumption of the host vehicle 100 is larger when the vehicle speed limit function is operating in the third limit mode than when the vehicle speed limit function is operating in the second limit mode. Therefore, the evaluation value EV for the operation state in which the vehicle speed limit function is operating in the third limit mode is set to a higher value than the evaluation value EV for the operation state in which the vehicle speed limit function is operating in the second limit mode.

Similarly, a degree of contribution to reducing an amount of energy consumption of the host vehicle 100 is larger when the vehicle speed limit function is operating in the fourth limit mode than when the vehicle speed limit function is operating in the third limit mode. Therefore, the evaluation value EV for the operation state in which the vehicle speed limit function is operating in the fourth limit mode is set to a higher value than the evaluation value EV for the operation state in which the vehicle speed limit function is operating in the third limit mode.

Thus, for the vehicle speed limit function, the evaluation value EV is set to a higher value as a degree of contribution to reducing an amount of energy consumption of the host vehicle 100 becomes larger.

Further, as understood from the above description, an operation state of the vehicle speed limit function is a control mode executed by the vehicle speed limit function (the off mode, the first limit mode, the second limit mode, the third limit mode, and the fourth limit mode).

The vehicle driving assistance apparatus 10 acquires, as the total evaluation value EVtotal, a value obtained by totaling evaluation values EV set for the operation state of the following travel function at that time and the operation state of the vehicle speed limit function at that time.

For example, when the following travel function is in an operation state in which the following travel function is in the off mode, and the vehicle speed limit function is in an operation state in which the vehicle speed limit function is operating in the first limit mode, the total evaluation value EVtotal is "0".

On the other hand, when the coasting following travel function of the following travel function is in an operation state in which the coasting following travel function is operating in the coasting acceleration/deceleration mode or the normal acceleration/deceleration mode, and the vehicle speed limit function is in an operation state in which the vehicle speed limit function is operating in the second limit mode, the total evaluation value EVtotal is "4".

It should be noted that as described above, in this example, when the total evaluation value EVtotal is equal to or greater than "4", the comprehensive evaluation is the highest evaluation. Therefore, in the example shown in FIG. 8, cases in which the comprehensive evaluation is the highest evaluation are the following four cases.
(1) A case where the normal following travel function of the following travel function is in an operation state in which the normal following travel function is operating, and the vehicle speed limit function is in an operation state in which the vehicle speed limit function is operating in the fourth limit mode.
(2) A case where the coasting following travel function of the following travel function is in an operation state in which the coasting following travel function is operating, and the vehicle speed limit function is in an operation state in which the vehicle speed limit function is operating in the second limit mode.
(3) A case where the coasting following travel function of the following travel function is in an operation state in which the coasting following travel function is operating, and the vehicle speed limit function is in an operation state in which the vehicle speed limit function is operating in the third limit mode.
(4) A case where the coasting following travel function of the following travel function is in an operation state in which the coasting following travel function is operating, and the vehicle speed limit function is in an operation state in which the vehicle speed limit function is operating in the fourth limit mode.

Then, the vehicle driving assistance apparatus 10 notifies the driver of the comprehensive evaluation by displaying, by the display device 40, the comprehensive evaluation image IMtotal corresponding to the comprehensive evaluation.

According to this, when the assistance system includes a plurality of assistance functions, that is, the following travel function and the vehicle speed limit function, utilization statuses of the following travel function and the vehicle speed limit function are not displayed by the display device 40, but utilization statuses of the following travel function and the vehicle speed limit function (that is, the utilization status of the assistance system) are put together into one and are displayed by the display device 40 as a comprehensive evaluation (the comprehensive evaluation image IMtotal). Therefore, the utilization status of the assistance system can be easily recognized by the driver (that is, a user of the assistance system).

As described above, in this example, the vehicle driving assistance apparatus 10 includes the display device 40 which displays an image to the driver of the host vehicle 100, and the ECU 90 which controls operation of the assistance system which assists driving of the host vehicle 100 by the driver. The assistance system includes a plurality of different assistance functions which assist driving of the host vehicle 100 by the driver, that is, the following travel function and the vehicle speed limit function. The ECU 90 is configured to perform a comprehensive evaluation (a comprehensive evaluation regarding the utilization status of the assistance system) based on operation states of the following travel function and the vehicle speed limit function, and to display the comprehensive evaluation (a result of the comprehensive evaluation) by the display device 40.

Further, in this example, when the assistance system is operating (that is, when at least one of the following travel function and the vehicle speed limit function is operating), the vehicle driving assistance apparatus 10 is configured to display the comprehensive evaluation (a result of a comprehensive evaluation regarding the utilization status of the assistance system) by the display device 40, and when operation of the assistance system is stopped (that is, when both the following travel function and the vehicle speed limit function are not operating), stop displaying the comprehensive evaluation (the result of the comprehensive evaluation regarding the utilization status of the assistance system) by the display device 40.

Further, in the above-described example, the assistance system includes two assistance functions, that is, the following travel function and the vehicle speed limit function. An evaluation value EV is set for each operation state of each of the following travel function and the vehicle speed limit function. A sum of evaluation values EV set for current operation states of the following travel function and the vehicle speed limit function, that is, the total evaluation value EVtotal, is equal to or greater than a predetermined value (in the above-described example, when the total evaluation value EVtotal is equal to or greater than "4"), the comprehensive evaluation is the highest evaluation. Further, evaluation values EV are set for respective operation states of the following travel function and the vehicle speed limit function such that the total evaluation value EVtotal is not equal to or greater than the predetermined value (in the above-described example, such that the total evaluation value EVtotal is not equal to or greater than "4") even when an evaluation value EV set for a current operation state of one assistance function among the following travel function and the vehicle speed limit function (in the above-described example, an evaluation value EV of "3" set for the coasting acceleration/deceleration mode and the normal acceleration/deceleration mode of the coasting following travel function of the following travel function) is a value equal to or greater than a first evaluation value (for example, "3"), when an evaluation value EV set for a current operation state of the other assistance function among the following travel function and the vehicle speed limit function (in the above-described example, an evaluation value EV of "0" set for the off mode and the first limit mode of the vehicle speed limit function) is smaller than a second evaluation value (for example, "0") which is smaller than the first evaluation value.

Then, evaluation values EV are set for respective operation states of the following travel function and the vehicle speed limit function such that the total evaluation value EVtotal is equal to or greater than the predetermined value (in the above-described example, such that the total evaluation value EVtotal is equal to or greater than "4") when an evaluation value EV set for a current operation state of one assistance function (in the above-described example, an evaluation value EV of "3" set for the coasting acceleration/deceleration mode and the normal acceleration/deceleration mode of the coasting following travel function of the following travel function) is a value equal to or greater than the first evaluation value (for example, "3"), and an evaluation value EV set for a current operation state of the other assistance function (in the above-described example, an evaluation value EV of "1" set for the second limit mode of the vehicle speed limit function) is a value smaller than the first evaluation value (for example, "3") but is a value equal to or greater than the second evaluation value (for example, "0").

Thus, a maximum evaluation value EV set for each assistance function is set to a value smaller than at least the total evaluation value EVtotal at which the comprehensive evaluation is the highest evaluation. That is, "3", which is the maximum evaluation value EV set for the following travel function, is set to a value smaller than "4", which is the total evaluation value EVtotal at which the comprehensive evaluation is the highest evaluation. Similarly, "3", which is the maximum evaluation value EV set for the vehicle speed limit function, is also set to a value smaller than "4", which is the total evaluation value EVtotal at which the comprehensive evaluation is the highest evaluation.

Further, the comprehensive evaluation is the highest evaluation when the total evaluation value EVtotal is equal to or greater than the predetermined value EVth (in the above-described example, when the total evaluation value EVtotal is equal to or greater than "4"), and a maximum value among evaluation values EV set for the coasting acceleration/deceleration mode and the normal acceleration/deceleration mode of the coasting following travel function of the following travel function and the fourth limit mode of the vehicle speed limit function is a largest value in a range smaller than the predetermined value EVth (in the above-described example, "3", which is a largest value in a range smaller than "4").

### <Operation Example 4>

When assistance functions to be comprehensively evaluated by the vehicle driving assistance apparatus 10 are two function, that is, the following travel function and the vehicle speed limit function, the vehicle driving assistance apparatus 10 may be configured to operate as follows.

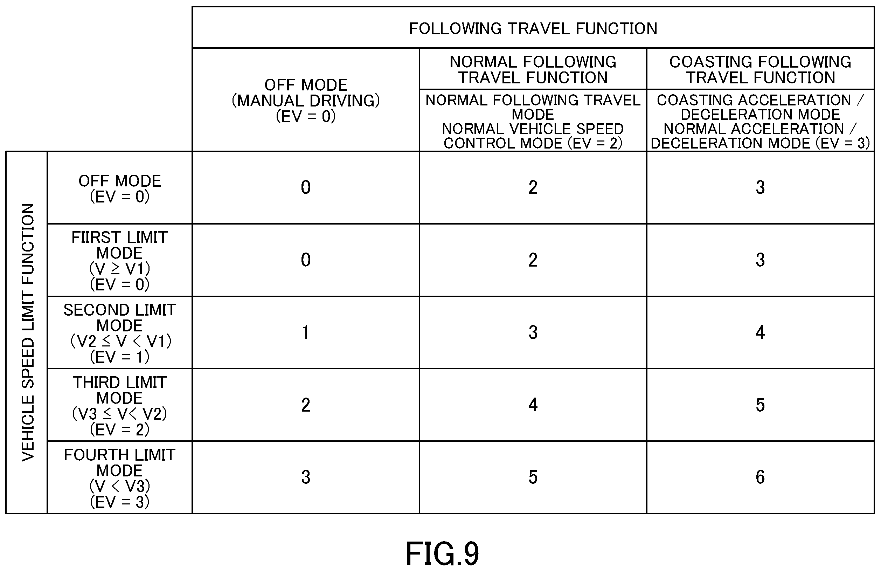

In this example, as shown in FIG. 9, an evaluation value EV is set for each operation state of each of the following travel function and the vehicle speed limit function. That is, for the following travel function, an evaluation value EV is set for each operation state as follows.
(1) An evaluation value EV of "0" is set for an operation state in which the following travel function is in the off mode (that is, a state in which the host vehicle 100 is traveling by manual driving by the driver). That is, an evaluation value EV of "0" is set for the off mode of the following travel function.
(2) An evaluation value EV of "2" is set for an operation state in which the normal following travel function is operating in the normal following travel mode or the normal vehicle speed control mode. That is, an evaluation value EV of "2" is set for the normal following travel mode or the normal vehicle speed control mode of the normal following travel function.
(3) An evaluation value EV of "3" is set for an operation state in which the coasting following travel function is operating in the coasting acceleration/deceleration mode or the normal acceleration/deceleration mode. That is, an evaluation value EV of "3" is set for the coasting acceleration/deceleration mode or the normal acceleration/deceleration mode of the coasting following travel function.

Thus, also in this example, for the following travel function, the evaluation value EV is set to a higher value as a degree of contribution to reducing an amount of energy consumption of the host vehicle 100 becomes larger.

Also in this example, an operation state of the following travel function is a control mode executed by the following travel function (the off mode, the normal following travel mode, the normal vehicle speed control mode, the coasting following travel mode, and the coasting vehicle speed control mode).

Further, as shown in FIG. 9, for the vehicle speed limit function, evaluation values EV are set in the same manner as the evaluation values EV for the vehicle speed limit function shown in FIG. 8.

The vehicle driving assistance apparatus 10 acquires, as the total evaluation value EVtotal, a value obtained by totaling evaluation values EV set for the operation state of the following travel function at that time and the operation state of the vehicle speed limit function at that time.

For example, when the following travel function is in an operation state in which the following travel function is in the off mode and the vehicle speed limit function is in an operation state in which the vehicle speed limit function is operating in the first limit mode, the total evaluation value EVtotal is "0".

On the other hand, when the normal following travel function of the following travel function is in an operation state in which the normal following travel function is operating in the normal following travel mode or the normal vehicle speed control mode, and the vehicle speed limit function is in an operation state in which the vehicle speed limit function is operating in the second limit mode, the total evaluation value EVtotal is "4".

As described above, in this example, when the total evaluation value EVtotal is equal to or greater than "4", the comprehensive evaluation is the highest evaluation. Therefore, in the example shown in FIG. 9, cases in which the comprehensive evaluation is the highest evaluation are the following five cases.
(1) A case where the normal following travel function of the following travel function is in an operation state in which the normal following travel function is operating, and the vehicle speed limit function is in an operation state in which the vehicle speed limit function is operating in the third limit mode.
(2) A case where the normal following travel function of the following travel function is in an operation state in which the normal following travel function is operating, and the vehicle speed limit function is in an operation state in which the vehicle speed limit function is operating in the fourth limit mode.
(3) A case where the coasting following travel function of the following travel function is in an operation state in which the coasting following travel function is operating, and the vehicle speed limit function is in an operation state in which the vehicle speed limit function is operating in the second limit mode.
(4) A case where the coasting following travel function of the following travel function is in an operation state in which the coasting following travel function is operating, and the vehicle speed limit function is in an operation state in which the vehicle speed limit function is operating in the third limit mode.
(5) A case where the coasting following travel function of the following travel function is in an operation state in which the coasting following travel function is operating, and the vehicle speed limit function is in an operation state in which the vehicle speed limit function is operating in the fourth limit mode.

Then, the vehicle driving assistance apparatus 10 notifies the driver of the comprehensive evaluation by displaying, by the display device 40, the comprehensive evaluation image IMtotal corresponding to the comprehensive evaluation.

According to this, when the assistance system includes a plurality of assistance functions, that is, the following travel function and the vehicle speed limit function, utilization statuses of the following travel function and the vehicle speed limit function are not displayed by the display device 40 separately, but are combined into one and displayed by the display device 40 as a comprehensive evaluation (the comprehensive evaluation image IMtotal). Therefore, the utilization status of the assistance system can be easily recognized by the driver (that is, a user of the assistance system).

As described above, in this example, the assistance system includes two assistance functions, that is, the following travel function and the vehicle speed limit function. An evaluation value EV is set for each operation state of each of the following travel function and the vehicle speed limit function. When the sum of evaluation values EV set for current operation states of the following travel function and the vehicle speed limit function, that is, the total evaluation value EVtotal, is equal to or greater than a predetermined value (in the above-described example, "4" or more), the comprehensive evaluation is the highest evaluation. Further, evaluation values EV are set for respective operation states such that the total evaluation value EVtotal is not equal to or greater than the predetermined value (in the above-described example, the total evaluation value EVtotal is not "4" or more) even when an evaluation value EV set for a current operation state of one assistance function among the following travel function and the vehicle speed limit function (in the above-described example, "3" set for the coasting acceleration/deceleration mode and the normal acceleration/deceleration mode of the coasting following travel function of the following travel function) is a value equal to or greater than a first evaluation value (for example, "3"), when an evaluation value EV set for a current operation state of the other assistance function (in this example, "0" set for the off mode and the first limit mode of the vehicle speed limit function) is smaller than a second evaluation value (for example, "0") which is smaller than the first evaluation value.

Then, evaluation values EV are set for respective operation states such that the total evaluation value EVtotal is equal to or greater than the predetermined value (in the above-described example, the total evaluation value EVtotal is "4" or more) when an evaluation value EV set for a current operation state of one assistance function (in the above-described example, "2" set for the normal following travel mode and the normal vehicle speed control mode of the normal following travel function of the following travel function) is smaller than the first evaluation value (for example, "3") but is equal to or greater than a third evaluation value (for example, "0"), and an evaluation value EV set for a current operation state of the other assistance function (in the above-described example, "2" set for the third limit mode of the vehicle speed limit function) is also smaller than the first evaluation value (for example, "3") but is equal to or greater than a fourth evaluation value (for example, "0").

Further, the comprehensive evaluation is the highest evaluation when the total evaluation value EVtotal is equal to or greater than the predetermined value EVth (in the above-described example, the total evaluation value EVtotal is "4" or more), and a maximum value among evaluation values EV set for the coasting acceleration/deceleration mode and the normal acceleration/deceleration mode of the coasting following travel function of the following travel function and the fourth limit mode of the vehicle speed limit function is the largest value in a range smaller than the predetermined value EVth (in the above-described example, "3", which is the largest value in a range smaller than "4").

### <Other Operation Examples>

When the assistance system includes an arbitrary number of assistance functions among all assistance functions including assistance functions other than the assistance functions provided in the assistance system described in the operation examples 1 to 4 (other assistance functions), the vehicle driving assistance apparatus 10 is configured to operate as follows.

In this case, for the assistance functions (target assistance functions) which are targets for comprehensive evaluation by the vehicle driving assistance apparatus 10, an evaluation value EV is set for each operation state. It should be noted that the target assistance functions may be all of the assistance functions provided in the vehicle driving assistance apparatus 10, or may be a part of the assistance functions.

The other assistance functions include the lane keeping function, the automatic lane change function, the automatic passing function, the automatic diverging function, the automatic merging function, the lane departure warning function, the lane departure prevention function, the blind spot monitor function, the other-vehicle approach warning function, the pedestrian approach warning function, the automatic high beam switching function, the automatic headlight direction control function, the automatic headlight/fog lamp lighting function, the automatic wiper operation function, the automatic defroster operation function, the automatic presentation function of surrounding situation, the automatic start function at traffic congestion, the automatic hazard lamp lighting function, the automatic air conditioner inside air circulation switching function, the automatic seat position changing function, the automatic display function of traffic congestion information, the automatic video broadcasting function, the automatic audio volume adjustment function, and the jerk reduction travel function.

For these other assistance functions, an evaluation value EV of "1" is set for an operation state in which each assistance function is operating, and an evaluation value EV of "0" is set for an operation state in which the operation of each assistance function is stopped.

When the assistance system includes two or more assistance functions as target assistance functions among the assistance functions listed in the present specification, including these other assistance functions, if the sum of the evaluation values EV set for the current operation states of the respective target assistance functions, that is, the total evaluation value EVtotal, is equal to or greater than the predetermined value EVth, the comprehensive evaluation is the highest evaluation.

The predetermined value EVth is set such that the total evaluation value EVtotal is not equal to or greater than the predetermined value EVth when the number of target assistance functions for which the evaluation value EV set for the current operation state is equal to or greater than a first evaluation value is less than a predetermined number Nth, and the evaluation values EV set for the current operation states of the remaining target assistance functions are smaller than a second evaluation value which is smaller than the first evaluation value.

The predetermined value EVth is set such that the total evaluation value EVtotal is equal to or greater than the predetermined value EVth when the number of target assistance functions for which the evaluation value EV set for the current operation state is equal to or greater than the first evaluation value is less than the predetermined number Nth, but the evaluation values EV set for the current operation states of the remaining target assistance functions are smaller than the first evaluation value and are equal to or greater than the second evaluation value.

For example, when ten assistance functions among the above other assistance functions are target assistance functions, an evaluation value EV of "1" is set for an operation state in which each target assistance function is operating, an evaluation value EV of "0" is set for an operation state in which the operation of each target assistance function is stopped (an operation state in which the target assistance function is in an off mode), and when the predetermined number Nth is set to seven, the predetermined value EVth is set to "7".

Alternatively, the predetermined value EVth may be set such that the total evaluation value EVtotal is equal to or greater than the predetermined value EVth when the number of target assistance functions for which the evaluation value EV set for the current operation state is smaller than the first evaluation value but equal to or greater than the second evaluation value is equal to or greater than the predetermined number Nth.

Then, the vehicle driving assistance apparatus 10 obtains, as the total evaluation value EVtotal, a value obtained by summing the evaluation values EV set for the operation states of the respective target assistance functions at that time.

Then, the vehicle driving assistance apparatus 10 notifies the driver of the comprehensive evaluation by displaying the comprehensive evaluation image IMtotal corresponding to the comprehensive evaluation by the display device 40.

According to this configuration, when the assistance system includes a plurality of assistance functions, instead of displaying the utilization status of each assistance function by the display device 40, the utilization statuses of the plurality of assistance functions (that is, the utilization status of the assistance system) are collectively combined and displayed by the display device 40 as a comprehensive evaluation (comprehensive evaluation image IMtotal). Therefore, it is possible to make it easier for the driver (that is, a user of the assistance system) to understand the utilization status of the assistance system.

It should be noted that the present invention is not limited to the above embodiments, and various modifications may be adopted within the scope of the present invention.

### REFERENCE SIGNS LIST

10: vehicle driving assistance apparatus; 20: power apparatus; 30: braking apparatus; 40: display device; 50: surrounding information detection device; 90: ECU; 100: host vehicle; 200: preceding vehicle

## Claims

1. A display control apparatus comprising a control device which controls operation of a display device which displays information on an assistance system used for utilization of a host vehicle,
wherein the assistance system has a plurality of different assistance functions, and
the control device is configured to display, by the display device, a result of an evaluation comprehensively evaluated with respect to a utilization status of the assistance system based on operation states of the respective assistance functions.

2. The display control apparatus according to claim 1,
wherein the control device is configured to:
display the result of the evaluation by the display device when the assistance system is operating; and
stop displaying the result of the evaluation by the display device when operation of the assistance system is stopped.

3. The display control apparatus according to claim 1,
wherein the assistance system has two assistance functions,
an evaluation value is set for each operation state of each of the assistance functions,
when a sum of the evaluation values set for current operation states of the respective assistance functions is equal to or greater than a predetermined value, the evaluation is a highest evaluation, and
the evaluation values are set for the respective operation states of the respective assistance functions such that the sum of the evaluation values set for the current operation states of the respective assistance functions does not become equal to or greater than the predetermined value when the evaluation value set for a current operation state of one of the assistance functions is a value equal to or greater than a first evaluation value, and the evaluation value set for a current operation state of the other assistance function is smaller than a second evaluation value which is smaller than the first evaluation value.

4. The display control apparatus according to claim 3,
wherein the evaluation values are set for the respective operation states of the respective assistance functions such that the sum of the evaluation values set for the current operation states of the respective assistance functions becomes equal to or greater than the predetermined value when the evaluation value set for the current operation state of the one assistance function is a value equal to or greater than the first evaluation value, and the evaluation value set for the current operation state of the other assistance function is a value smaller than the first evaluation value but equal to or greater than the second evaluation value.

5. The display control apparatus according to claim 3 or 4, wherein the evaluation value is set to become higher as a degree of contribution to reducing an amount of energy consumption of the host vehicle becomes greater.

6. The display control apparatus according to claim 1, wherein the operation state of the assistance function is a control mode being executed by the assistance function.

7. The display control apparatus according to claim 6,
wherein the assistance function is a function which autonomously accelerates and decelerates the host vehicle and has a coasting acceleration/deceleration mode and a normal acceleration/deceleration mode as the control modes,
the coasting acceleration/deceleration mode is a control mode in which the host vehicle is autonomously accelerated and decelerated such that an inter-vehicle distance fluctuates between an upper limit value and a lower limit value of a set inter-vehicle distance range, and in which the host vehicle is decelerated by causing the host vehicle to coast when a preceding vehicle exists in front of the host vehicle,
the inter-vehicle distance being a distance between the preceding vehicle and the host vehicle,
the normal acceleration/deceleration mode is a control mode in which the host vehicle is autonomously accelerated and decelerated such that the inter-vehicle distance is maintained at a target inter-vehicle distance when the preceding vehicle exists, and
the evaluation value set for the normal acceleration/deceleration mode is lower than the evaluation value set for the coasting acceleration/deceleration mode.

8. The display control apparatus according to claim 7, wherein the evaluation value set for the normal acceleration/deceleration mode is zero.

9. The display control apparatus according to claim 7,
wherein the coasting acceleration/deceleration mode includes an acceleration mode and a coasting deceleration mode,
the acceleration mode is a mode in which the host vehicle is accelerated,
the coasting deceleration mode is a mode in which the host vehicle is decelerated by causing the host vehicle to coast,
the evaluation value set for the acceleration mode is higher than the evaluation value set for the normal acceleration/deceleration mode, and
the evaluation value set for the coasting deceleration mode is higher than the evaluation value set for the acceleration mode.

10. The display control apparatus according to claim 1,
wherein the evaluation becomes the highest evaluation when a sum of the evaluation values is equal to or greater than a predetermined value, and
the evaluation value set for the coasting deceleration mode is a largest value within a range smaller than the predetermined value.

11. The display control apparatus according to claim 1, wherein the operation state is a traveling environment of the host vehicle realized by the assistance function.

12. The display control apparatus according to claim 11,
wherein the assistance system includes, as the assistance functions,
a following travel function having a following travel mode in which the host vehicle is autonomously accelerated and decelerated such that the host vehicle travels following a preceding vehicle, and
an air resistance reduction travel function having an air resistance reduction travel mode in which a target inter-vehicle distance is set such that an air resistance reduction effect of the host vehicle due to the preceding vehicle increases when the following travel function is in an operating state in the following travel mode, and
the traveling environment of the host vehicle is a vertical projected area of the preceding vehicle and an inter-vehicle distance when the air resistance reduction travel function is operating in the air resistance reduction travel mode.

13. The display control apparatus according to claim 12, wherein the evaluation value set for the air resistance reduction travel mode is higher when a predetermined traveling environment condition that the vertical projected area is equal to or greater than a predetermined area and the inter-vehicle distance is less than a predetermined distance is satisfied than when the predetermined traveling environment condition is not satisfied.

14. The display control apparatus according to claim 13, wherein the evaluation value set for the air resistance reduction travel mode is obtained from a lookup table using the vertical projected area and the inter-vehicle distance as arguments.

15. The display control apparatus according to claim 12, wherein the evaluation value set for the air resistance reduction travel mode is three or more kinds of values corresponding to a combination of the vertical projected area and the inter-vehicle distance.

16. A vehicle comprising the display control apparatus according to claim 1.

17. A display control method for controlling operation of a display device which displays information on an assistance system used for utilization of a host vehicle, the assistance system including a plurality of different assistance functions,
wherein the display control method comprises a step of displaying, by the display device, a result of an evaluation comprehensively evaluated with respect to a utilization status of the assistance system based on operation states of the respective assistance functions.

18. A display control program for controlling operation of a display device which displays information on an assistance system used for utilization of a host vehicle, the assistance system including a plurality of different assistance functions,
wherein the display control program is configured to display, by the display device, a result of an evaluation comprehensively evaluated with respect to a utilization status of the assistance system based on operation states of the respective assistance functions.
